(19) Europäisches Patentamt / European Patent Office / Office européen des brevets

(11) **EP 3 543 732 A1**

(12) **EUROPEAN PATENT APPLICATION**
published in accordance with Art. 153(4) EPC

(43) Date of publication:
**25.09.2019 Bulletin 2019/39**

(21) Application number: **17866087.4**

(22) Date of filing: **24.10.2017**

(51) Int Cl.:
**G01S 7/486** (2006.01)    **G01S 7/484** (2006.01)
**G01S 17/08** (2006.01)

(86) International application number:
**PCT/JP2017/038389**

(87) International publication number:
**WO 2018/079561 (03.05.2018 Gazette 2018/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **24.10.2016  JP 2016207988**

(71) Applicant: **Pioneer Corporation
Tokyo 113-0021 (JP)**

(72) Inventors:
• **MATSUDA Takehiro
   Tokyo 112-0002 (JP)**
• **YOSHIDA Yuji
   Tokyo 112-0002 (JP)**

• **HANADA Kenichi
   Tokyo 112-0002 (JP)**
• **WATANABE Hiroyuki
   Tokyo 112-0002 (JP)**
• **KOYANAGI Hajime
   Tokyo 113-0021 (JP)**
• **KONO Akira
   Tokyo 112-0002 (JP)**
• **MIYANABE Shogo
   Tokyo 112-0002 (JP)**
• **KUROKI Eiji
   Tokyo 112-0002 (JP)**
• **FURUKAWA Junichi
   Tokyo 113-0021 (JP)**

(74) Representative: **Vossius & Partner
Patentanwälte Rechtsanwälte mbB
Siebertstrasse 3
81675 München (DE)**

(54) **SENSOR DEVICE, SENSING METHOD, PROGRAM, AND STORAGE MEDIUM**

(57)    An electromagnetic wave from a transmitter (100) is emitted toward the outside of a first angular range (AR). A receiver (200) cannot detect an electromagnetic wave reflected at a position somewhat close to a sensor device (10), specifically, an electromagnetic wave reflected at a position apart from the sensor device (10) by less than a distance R1. Specifically, when the electromagnetic wave is reflected at the position apart from the sensor device (10) by less than the distance R1, the electromagnetic wave reaches the sensor device (10) before the first angular range (AR) reaches a Y axis. Consequently, the electromagnetic wave reflected at the position somewhat close to the sensor device (10) is not detected by the receiver (200).

FIG. 1

EP 3 543 732 A1

**Description**

TECHNICAL FIELD

The present invention relates to a sensor device, a sensing method, a program, and a storage medium.

BACKGROUND ART

In recent years, a sensor device using a LIght Detection And Ranging (LIDAR) has been developed. As disclosed in Patent Document 1, a sensor device using the LIDAR includes a transmitter and a receiver. The sensor device can measure a position of a target object, that is, a distance between the sensor device and the target object on the basis of time from emission of light from the transmitter to detection of the light by the receiver. In the sensor device in Patent Document 1, an emission direction of light from the transmitter is changed by rotating a movable reflector. Consequently, the sensor device can measure positions of a plurality of target objects.

RELATED DOCUMENT

PATENT DOCUMENT

[Patent Document 1] Japanese Unexamined Patent Publication No. 2011-95208

SUMMARY OF THE INVENTION

TECHNICAL PROBLEM

A transmitter (for example, a laser diode (LD)) of a sensor device such as a LIDAR or a RAdio Detection And Ranging (RADAR) emits a first electromagnetic wave and then emits a second electromagnetic wave. In this case, when the first electromagnetic wave is reflected at a position somewhat far away from the sensor device, and the second electromagnetic wave is reflected at a position somewhat close to the sensor device, the first electromagnetic wave and the second electromagnetic wave may reach the sensor device substantially simultaneously. In this case, a receiver (for example, a photodiode (PD)) of the sensor device may not discriminate the first electromagnetic wave and the second electromagnetic wave from each other.

An example of an object of the present invention is to prevent a receiver of a sensor device from simultaneously detecting an electromagnetic wave reflected at a position somewhat close to the sensor device and an electromagnetic wave reflected at a position somewhat far away from the sensor device.

SOLUTION TO PROBLEM

The invention according to claim 1 relates to a sensor device including a transmitter; and a receiver, in which the receiver is capable of detecting an electromagnetic wave from a first angular range outside the sensor device, and in which an electromagnetic wave from the transmitter is emitted toward the outside of the first angular range.

The invention according to claim 4 relates to a sensor device including a transmitter that emits an electromagnetic wave; and a receiver that receives the electromagnetic wave, in which the receiver is disposed at a position incapable of receiving a first reflected wave which is a result of the electromagnetic wave emitted from the transmitter at a first timing and is reflected by a first reflection object, and capable of receiving a second reflected wave reflected by a second reflection object present farther than the first reflection object.

The invention according to claim 5 relates to a sensor device including a transmitter; and a receiver, in which the transmitter emits an electromagnetic wave in a first direction at a first timing, and in which a receivable range of the receiver is set such that reflected light which is a result of light emitted at the first timing and is reflected by a predetermined reflection object is receivable at a second timing temporally later than the first timing.

The invention according to claim 6 relates to a sensing method used by a sensor device including a transmitter and a receiver, the sensing method including an emission step of emitting an electromagnetic wave from the transmitter; and a reception step of detecting, by the receiver, an electromagnetic wave from a first angular range outside the sensor device, in which the electromagnetic wave emitted from the transmitter is emitted toward the outside of the first angular range.

The invention according to claim 7 relates to a program causing a computer to execute the sensing method.

The invention according to claim 8 relates to a storage medium storing the program.

The invention according to claim 9 relates to a sensor device including a transmitter; and a receiver, in which the transmitter emits electromagnetic waves at a first timing and a second timing later than the first timing, and in which the transmitter emits the electromagnetic waves such that a period during which the receiver is capable of receiving an electromagnetic wave emitted at the second timing is later than a period during which the receiver is capable of receiving an electromagnetic wave emitted at the first timing.

BRIEF DESCRIPTION OF THE DRAWINGS

The above-described object, and other objects, features, and advantages will become apparent throughout preferable embodiments described below and the accompanying drawings.

Fig. 1 is a diagram illustrating a sensor device according to an embodiment.
Fig. 2 is a diagram for explaining a first example of an operation of the sensor device illustrated in Fig. 1.
Fig. 3 is a diagram for explaining the first example of an operation of the sensor device illustrated in Fig. 1.
Fig. 4 is a diagram for explaining the first example of an operation of the sensor device illustrated in Fig. 1.
Fig. 5 is a diagram for explaining a second example of an operation of the sensor device illustrated in Fig. 1.
Fig. 6 is a diagram for explaining the second example of an operation of the sensor device illustrated in Fig. 1.
Fig. 7 is a diagram for explaining the second example of an operation of the sensor device illustrated in Fig. 1.
Fig. 8 is a diagram for explaining a third example of an operation of the sensor device illustrated in Fig. 1.
Fig. 9 is a diagram for explaining the third example of an operation of the sensor device illustrated in Fig. 1.
Fig. 10 is a diagram for explaining the third example of an operation of the sensor device illustrated in Fig. 1.
Fig. 11 is a diagram for explaining a timing at which an electromagnetic wave is emitted from the sensor device illustrated in Fig. 1.
Fig. 12 is a diagram for explaining an example of an operation of a sensor device illustrated in Fig. 11.
Fig. 13 is a diagram for explaining an example of an operation of the sensor device illustrated in Fig. 11.
Fig. 14 is a diagram for explaining an example of an operation of the sensor device illustrated in Fig. 11.
Fig. 15 is a diagram for explaining an example of an operation of the sensor device illustrated in Fig. 11.
Fig. 16 is a diagram for explaining an example of an operation of the sensor device illustrated in Fig. 11.
Fig. 17 is a diagram for explaining an example of a relationship between a direction allowing emission of an electromagnetic wave from a transmitter and a timing of an electromagnetic wave emitted from the transmitter.
Fig. 18 is a diagram illustrating a modification example of Fig. 11.
Fig. 19 is a diagram for explaining an example of an operation of a sensor device illustrated in Fig. 18.
Fig. 20 is a diagram for explaining an example of an operation of the sensor device illustrated in Fig. 18.
Fig. 21 is a diagram for explaining an example of an operation of the sensor device illustrated in Fig. 18.
Fig. 22 is a diagram for explaining an example of an operation of the sensor device illustrated in Fig. 18.
Fig. 23 is a diagram for explaining an example of an operation of the sensor device illustrated in Fig. 18.
Fig. 24 is a diagram illustrating a sensor device according to Example 1.
Fig. 25 is a diagram for explaining an example of a method in which a receiver illustrated in Fig. 24 detects an electromagnetic wave.
Fig. 26 is a diagram for explaining an example of an operation of a sensor device illustrated in Fig. 24.
Fig. 27 is a diagram for explaining an example of an operation of the sensor device illustrated in Fig. 24.
Fig. 28 is a diagram for explaining an example of an operation of the sensor device illustrated in Fig. 24.
Fig. 29 is a diagram for explaining an example of an operation of the sensor device illustrated in Fig. 24.
Fig. 30 is a diagram for explaining an example of a timing at which an electromagnetic wave is emitted from the sensor device illustrated in Fig. 24.
Fig. 31 is a diagram for explaining an example of a timing at which an electromagnetic wave is emitted from the sensor device illustrated in Fig. 24.
Fig. 32 is a diagram for explaining an example of a timing at which an electromagnetic wave is emitted from the sensor device illustrated in Fig. 24.
Fig. 33 is a diagram illustrating a sensor device according to Example 2.
Fig. 34 is a diagram for explaining an example of an operation of the sensor device illustrated in Fig. 33.
Fig. 35 is a diagram for explaining an example of an operation of the sensor device illustrated in Fig. 33.
Fig. 36 is a diagram for explaining an example of an operation of the sensor device illustrated in Fig. 33.
Fig. 37 is a diagram for explaining an example of an operation of the sensor device illustrated in Fig. 33.
Fig. 38 is a diagram for explaining an example of a timing at which an electromagnetic wave is emitted from the sensor device illustrated in Fig. 33.
Fig. 39 is a diagram for explaining an example of a timing at which an electromagnetic wave is emitted from the sensor device illustrated in Fig. 33.

Fig. 40 is a diagram for explaining an example of a timing at which an electromagnetic wave is emitted from the sensor device illustrated in Fig. 33.

Fig. 41 is a diagram illustrating a sensor device according to Example 3.

Fig. 42 is a diagram for explaining an example of an operation of the sensor device illustrated in Fig. 41.

Fig. 43 is a diagram for explaining an example of an operation of the sensor device illustrated in Fig. 41.

Fig. 44 is a diagram for explaining an example of an operation of the sensor device illustrated in Fig. 41.

Fig. 45 is a diagram for explaining an example of an operation of the sensor device illustrated in Fig. 41.

Fig. 46 is a diagram for explaining an example of a timing at which an electromagnetic wave is emitted from the sensor device illustrated in Fig. 41.

Fig. 47 is a diagram for explaining an example of a timing at which an electromagnetic wave is emitted from the sensor device illustrated in Fig. 41.

Fig. 48 is a diagram for explaining an example of a timing at which an electromagnetic wave is emitted from the sensor device illustrated in Fig. 41.

Fig. 49 is a timing chart for explaining an operation of a sensor device according to Example 4.

Fig. 50 is a diagram for explaining an example of the operation illustrated in Fig. 49.

Fig. 51 is a diagram for explaining an example of the operation illustrated in Fig. 49.

Fig. 52 is a diagram for explaining an example of the operation illustrated in Fig. 49.

Fig. 53 is a diagram for explaining an example of the operation illustrated in Fig. 49.

Fig. 54 is a diagram for explaining an example of the operation illustrated in Fig. 49.

Fig. 55 is a diagram for explaining an example of the operation illustrated in Fig. 49.

Fig. 56 is a diagram illustrating a modification example of Fig. 49.

Fig. 57 is a diagram for explaining an example of an operation illustrated in Fig. 56.

Fig. 58 is a diagram for explaining an example of the operation illustrated in Fig. 56.

Fig. 59 is a diagram for explaining an example of the operation illustrated in Fig. 56.

Fig. 60 is a diagram for explaining an example of the operation illustrated in Fig. 56.

Fig. 61 is a block diagram illustrating a functional configuration of the sensor device illustrated in Fig. 1.

DESCRIPTION OF EMBODIMENTS

Hereinafter, embodiments of the present invention will be described with reference to the drawings. The same constituent elements are given the same reference numerals throughout all the drawings, and description thereof will not be repeated as appropriate.

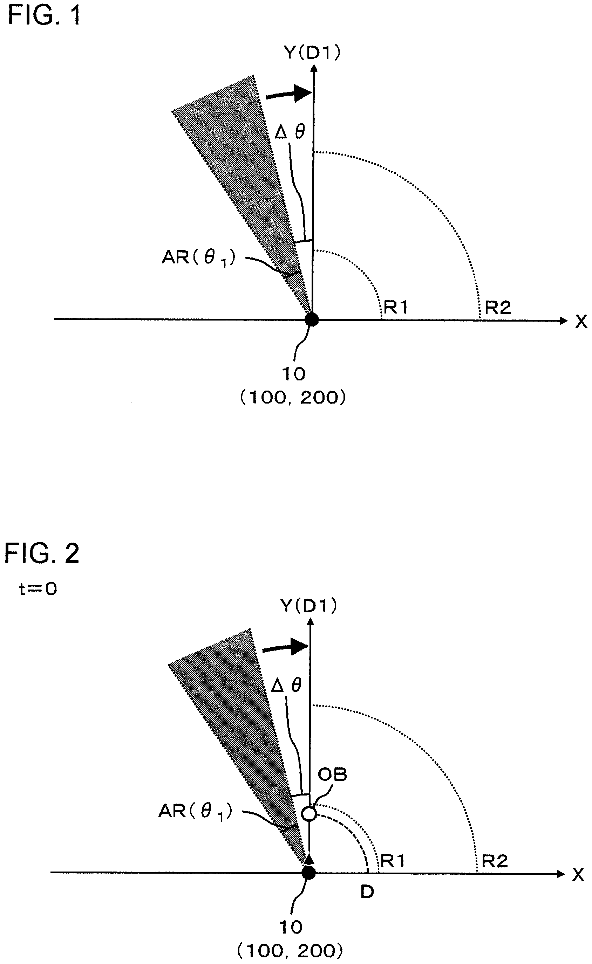

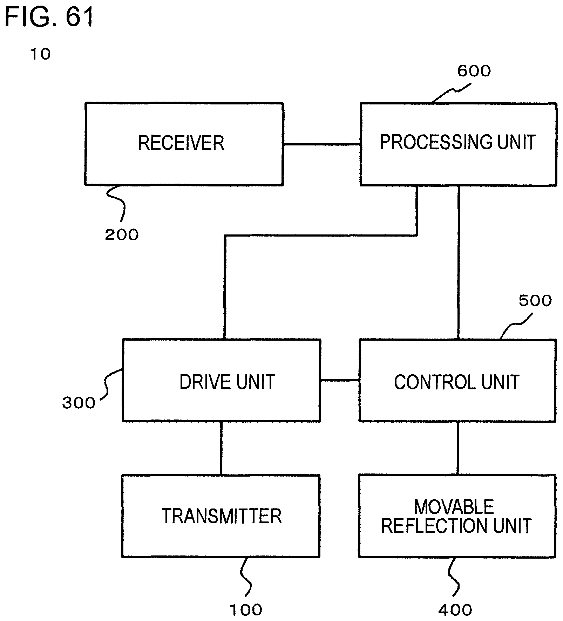

Fig. 1 is a diagram illustrating a sensor device 10 according to an embodiment. In the example illustrated in this figure, for description, the sensor device 10 is placed at the origin of XY orthogonal coordinates. Fig. 61 is a block diagram illustrating a functional configuration of the sensor device illustrated in Fig. 1. The sensor device 10 includes a transmitter 100 and a receiver 200. The sensor device 10 includes a drive unit 300, a movable reflection unit 400, a control unit 500, and a processing unit 600.

The transmitter 100 is capable of emitting an electromagnetic wave, and is, for example, a laser diode (LD). In one example, an electromagnetic wave from the transmitter 100 is light (for example, an infrared ray, visible light, or an ultraviolet ray). In this example, the sensor device 10 may function as a LIght Detection And Ranging (LIDAR). In another example, an electromagnetic wave from the transmitter 100 is a radio wave. In this example, the sensor device 10 may function as a RAdio Detection And Ranging (RADAR).

The drive unit 300 is configured to include a circuit to drive the transmitter 100 by controlling the supply of power to the transmitter 100. The drive unit 300 outputs a signal indicating a timing of driving the transmitter 100 (that is, a signal indicating a timing at which an electromagnetic wave is emitted by the transmitter 100) to the processing unit.

The receiver 200 is capable of detecting an electromagnetic wave from a first angular range AR (angle $\theta_1$) outside the sensor device 10, and is, for example, a photodiode (PD), and more specifically, for example, an avalanche photodiode (APD). The first angular range AR rotates centering on the sensor device 10. In one example, the first angular range AR oscillates within a predetermined range. In another example, the first angular range AR rotates in only one direction clockwise or counterclockwise. In the timing illustrated in this figure, the first angular range AR rotates clockwise centering on the sensor device 10 at angular velocity $\omega$. The angular velocity $\omega$ may change depending on time, and may be constant regardless of time.

The processing unit 600 computes a distance to an object having reflected an electromagnetic wave in an emission direction of the electromagnetic wave by using a time from emission of the electromagnetic wave by the transmitter 100 to receipt of a reflected wave of the electromagnetic wave by the receiver 200. Specifically, a signal indicating a timing of emitting an electromagnetic wave is input to the processing unit 600 from the drive unit 300. A received signal is acquired from the receiver 200. The processing unit 600 computes a time from emission of an electromagnetic wave by the transmitter 100 to receipt of a reflected wave of the electromagnetic wave by the receiver 200 on the basis of the signal indicating the timing and a light reception signal.

The sensor device 10 can measure a position of a target object on the basis of a time from emission of an electromagnetic wave from the transmitter 100 to detection of the electromagnetic wave by the receiver 200. Specifically, in a case where an electromagnetic wave is reflected by a target object present at a position apart from the sensor device 10 by a distance R, a time from emission of the electromagnetic wave from the sensor device 10 to return of the electromagnetic wave to the sensor device 10 is 2R/c (where c is a velocity of the electromagnetic wave). Thus, the sensor device 10 can measure a position of the target object, that is, the distance R on the basis of the time.

The movable reflection unit 400 is configured to include, for example, a MEMS mirror and a driving circuit thereof. An angle of a reflection surface of the MEMS mirror is controlled by the control unit 500. The movable reflection unit 400 reflects an electromagnetic wave emitted from the transmitter 100 at the reflection surface, and thus emits the electromagnetic wave in a desired direction outside the sensor device 10. The movable reflection unit 400 includes, for example, a two-axis drive MEMS mirror, and may thus scan a predetermined region with an electromagnetic wave in a two-dimensional manner. However, in a case where an emission direction of an electromagnetic wave is variable, the present configuration is only an example. For example, the transmitter 100 may be fixed to a movable stage (not illustrated), and an emission direction of an electromagnetic wave may be controlled by the control unit 500 controlling a direction of the transmitter 100.

In the example illustrated in Fig. 1, an electromagnetic wave from the transmitter 100 is emitted toward the outside of the first angular range AR. Specifically, the first angular range AR does not reach a Y axis at the timing illustrated in Fig. 1. At this timing, the electromagnetic wave from the transmitter 100 is emitted toward a first direction D1, and, in the example illustrated in this figure, the first direction D1 is along the Y axis. In the above-described way, in the example illustrated in Fig. 1, the electromagnetic wave from the transmitter 100 is emitted in a direction deviated relative to the first angular range AR by an angle $\Delta\theta$ in an advancing direction (a clockwise direction in the example illustrated in this figure) of the first angular range AR.

The receiver 200 cannot detect an electromagnetic wave reflected at a position somewhat close to the sensor device 10, specifically, at a position apart from the sensor device 10 by less than the distance R1. Specifically, in a case where the electromagnetic wave is emitted at the timing illustrated in Fig. 1, when the electromagnetic wave is reflected at a position apart from the sensor device 10 by less than the distance R1, the electromagnetic wave reaches the sensor device 10 before the first angular range AR reaches the Y axis. In other words, the following Expression (1) is satisfied.

$$\Delta\theta > \int_0^{2R/c} \omega dt \quad \left(0 \leq R < R1\right) \quad (1)$$

As mentioned above, an electromagnetic wave reflected at a position somewhat close to the sensor device 10 is not detected by the receiver 200 (for example, examples illustrated in Figs. 2 to 4 which will be described later).

The receiver 200 can detect an electromagnetic wave reflected at a position somewhat far away from the sensor device 10, specifically, at a position apart from the sensor device 10 by the distance R1 or greater and a distance R2 or less (where R1<R2). Specifically, in a case where an electromagnetic wave is emitted at the timing illustrated in this figure, when the electromagnetic wave is reflected at a position apart from the sensor device 10 by the distance R1 or greater and the distance R2 or less, the electromagnetic wave reaches the sensor device 10 at a timing at which the first angular range AR overlaps the Y axis. In other words, the following Expression (2) is satisfied.

$$\int_0^{2R/c} \omega dt - \theta_1 \leq \Delta\theta \leq \int_0^{2R/c} \omega dt \quad \left(R1 \leq R \leq R2\right) \quad (2)$$

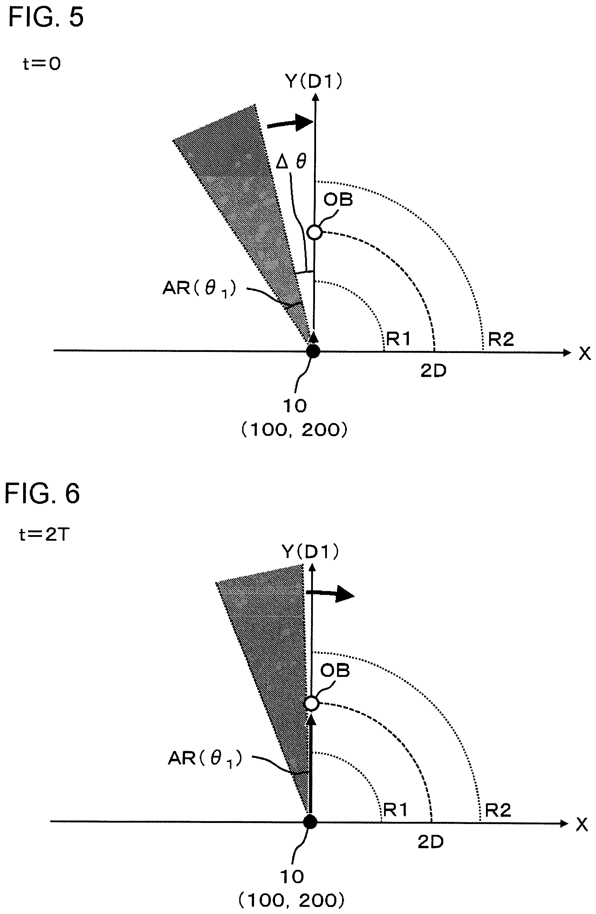

As mentioned above, an electromagnetic wave reflected at a position somewhat far away from the sensor device 10 is detected by the receiver 200 (for example, examples illustrated in Figs. 5 to 7 which will be described later).

The receiver 200 cannot detect an electromagnetic wave reflected at a position considerably far away from the sensor device 10, specifically, at a position apart from the sensor device 10 by greater than the distance R2. Specifically, in a case where an electromagnetic wave is emitted at the timing illustrated in this figure, when the electromagnetic wave is reflected at a position apart from the sensor device 10 by greater than the distance R2, the electromagnetic wave reaches the sensor device 10 after the first angular range AR passes the Y axis. In other words, the following Expression (3) is satisfied.

$$\Delta\theta < \int_0^{2R/c} \omega\,\mathrm{d}t - \theta_1 \quad \left(R2 < R\right) \quad (3)$$

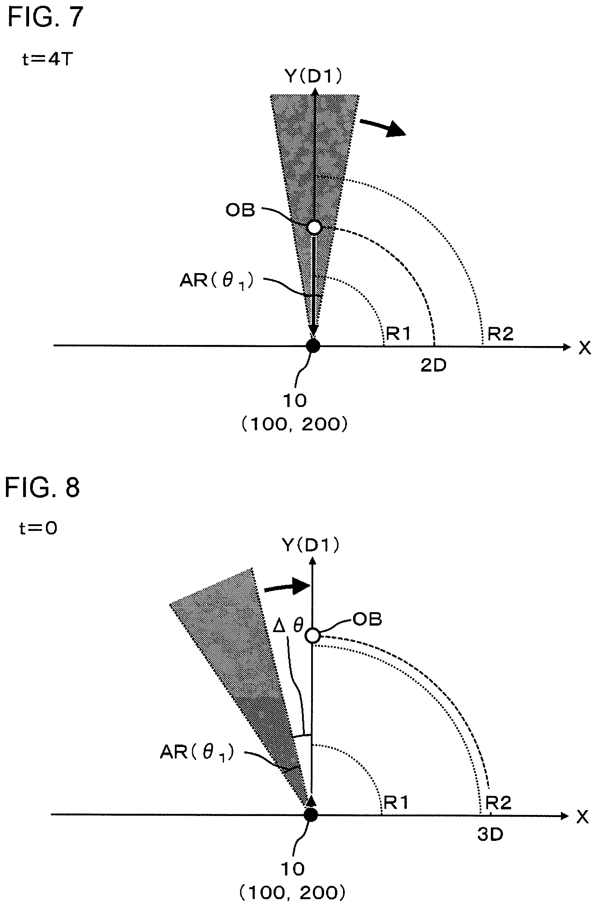

In other words, an electromagnetic wave reflected at a position considerably far away from the sensor device 10 is not detected by the receiver 200 (for example, examples illustrated in Figs. 8 to 10 which will be described later).

In the example illustrated in Fig. 1, the receiver 200 does not simultaneously detect an electromagnetic wave reflected at a position somewhat close to the sensor device 10 and an electromagnetic wave reflected at a position somewhat far away from the sensor device 10. Specifically, as described by using Expression (2), the receiver 200 can detect an electromagnetic wave reflected at a position somewhat far away from the sensor device 10. In contrast, as described by using Expression (1), the receiver 200 cannot detect an electromagnetic wave reflected at a position somewhat close to the sensor device 10. Consequently, the receiver 200 does not simultaneously detect an electromagnetic wave reflected at a position somewhat close to the sensor device 10 and an electromagnetic wave reflected at a position somewhat far away from the sensor device 10.

In one example, the distance R1 is 5 m. In this example, the receiver 200 cannot detect an electromagnetic wave reflected at a position apart from the sensor device 10 by less than 5 m.

Figs. 2 to 4 are diagrams for explaining a first example of an operation of the sensor device 10 illustrated in Fig. 1. In Figs. 2 to 4, an arrow extending from the sensor device 10 indicates an electromagnetic wave emitted from the sensor device 10, and an arrow extending from a target object OB indicates an electromagnetic wave reflected by the target object OB. In this example, the target object OB is present at a position apart from the sensor device 10 in the first direction D1 by a distance D. The distance D is less than the distance R1 (D<R1). In this example, a sensing method using the sensor device 10 is performed as follows. A program may cause a computer to execute the sensing method. In this case, the program may be stored in a storage medium. A program may also cause the computer to execute a sensing method which will be described later, and this program may be stored in a storage medium.

First, as illustrated in Fig. 2, at a time point t=0, an electromagnetic wave from the transmitter 100 is emitted toward the first direction D1.

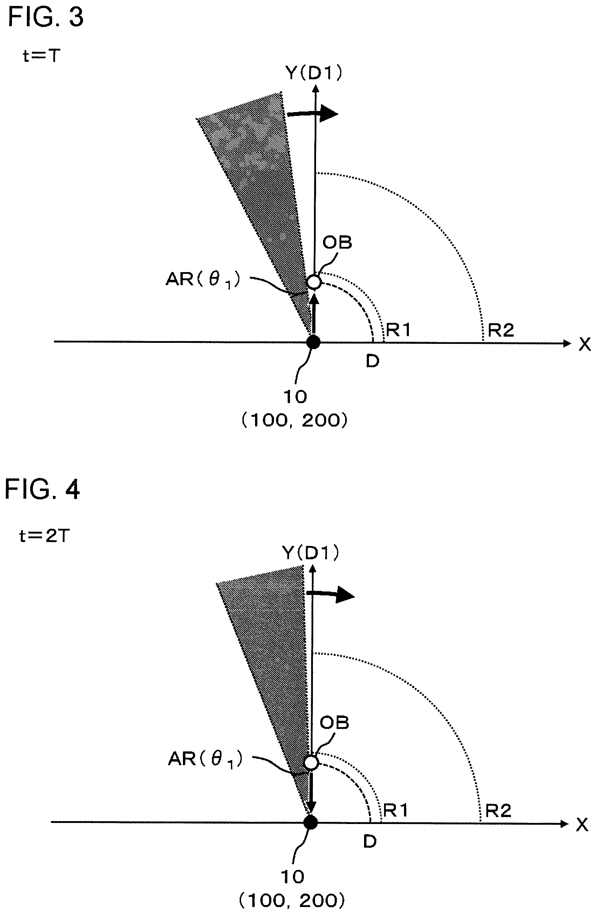

Next, as illustrated in Fig. 3, at a time point t=T, the electromagnetic wave from the transmitter 100 reaches the target object OB. In other words, in this example, a velocity of the electromagnetic wave is D/T.

Next, as illustrated in Fig. 4, at a time point t=2T, the electromagnetic wave reflected from the target object OB reaches the sensor device 10. At the time point t=2T, the first angular range AR does not reach the first direction D1 yet. Thus, the electromagnetic wave is not detected by the receiver 200.

Figs. 5 to 7 are diagrams for explaining a second example of an operation of the sensor device 10 illustrated in Fig. 1. In Figs. 5 to 7, an arrow extending from the sensor device 10 indicates an electromagnetic wave emitted from the sensor device 10, and an arrow extending from the target object OB indicates an electromagnetic wave reflected by the target object OB. In this example, the target object OB is present at a position apart from the sensor device 10 in the first direction D1 by a distance 2D. The distance 2D is equal to or greater than the distance R1 and equal to or less than the distance R2 (R1≤2D≤R2). In this example, a sensing method using the sensor device 10 is performed as follows.

First, as illustrated in Fig. 5, at a time point t=0, an electromagnetic wave from the transmitter 100 is emitted toward the first direction D1.

Next, as illustrated in Fig. 6, at a time point t=2T, the electromagnetic wave from the transmitter 100 reaches the target object OB. In other words, in this example, a velocity of the electromagnetic wave is D/T.

Next, as illustrated in Fig. 7, at a time point t=4T, the electromagnetic wave reflected from the target object OB reaches the sensor device 10. At the time point t=4T, the first angular range AR overlaps the first direction D1. Thus, the electromagnetic wave is detected by the receiver 200.

Figs. 8 to 10 are diagrams for explaining a third example of an operation of the sensor device 10 illustrated in Fig. 1. In Figs. 8 to 10, an arrow extending from the sensor device 10 indicates an electromagnetic wave emitted from the sensor device 10, and an arrow extending from the target object OB indicates an electromagnetic wave reflected by the target object OB. In this example, the target object OB is present at a position apart from the sensor device 10 in the first direction D1 by a distance 3D. The distance 3D is greater than the distance R2 (R2<3D). In this example, a sensing method using the sensor device 10 is performed as follows.

First, as illustrated in Fig. 8, at a time point t=0, an electromagnetic wave from the transmitter 100 is emitted toward the first direction D1.

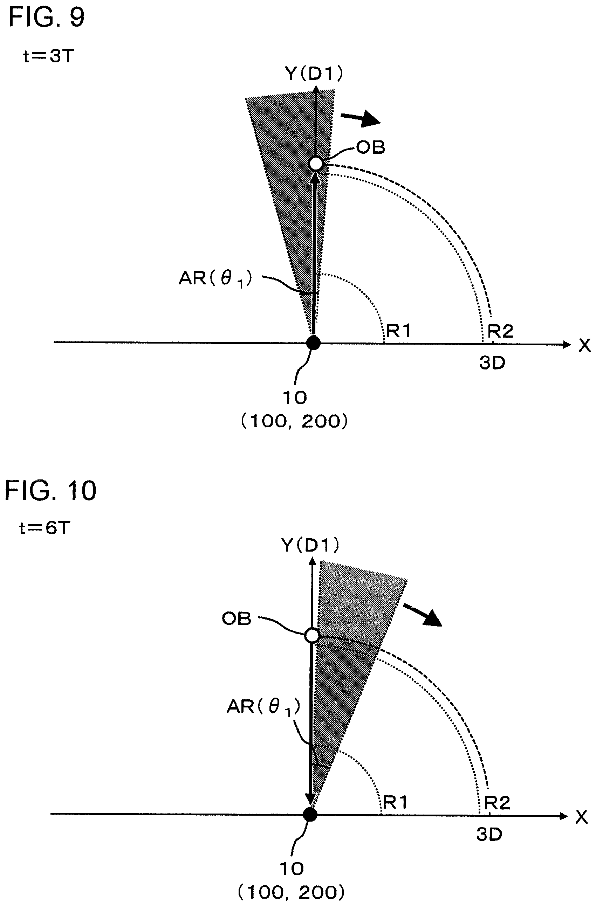

Next, as illustrated in Fig. 9, at a time point t=3T, the electromagnetic wave from the transmitter 100 reaches the target object OB. In other words, in this example, a velocity of the electromagnetic wave is D/T.

Next, as illustrated in Fig. 10, at a time point t=6T, the electromagnetic wave reflected from the target object OB reaches the sensor device 10. At the time point t=6T, the first angular range AR has already passed the first direction D1. Thus, the electromagnetic wave is not detected by the receiver 200.

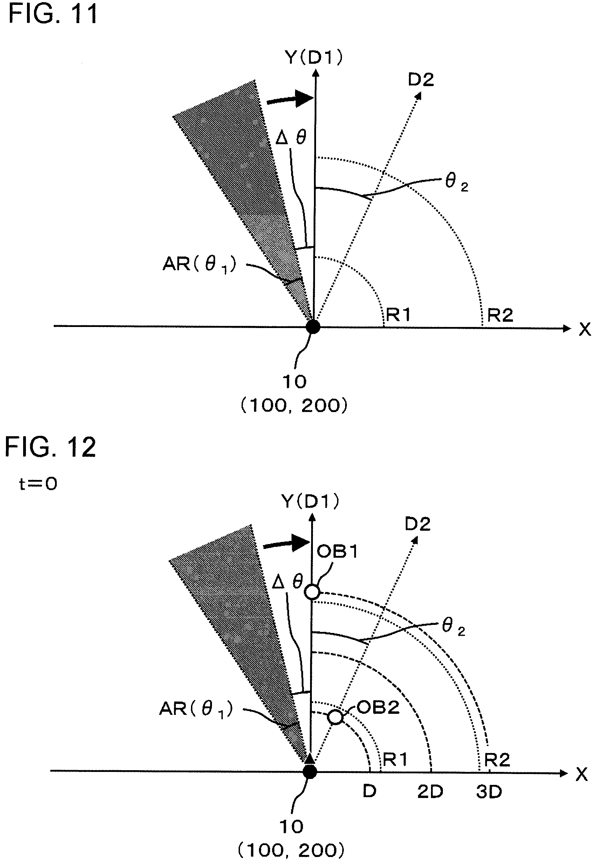

Fig. 11 is a diagram for explaining a timing at which an electromagnetic wave is emitted from the sensor device 10 illustrated in Fig. 1. In the example illustrated in this figure, an electromagnetic wave from the transmitter 100 is emitted toward the first direction D1, and the next electromagnetic wave from the transmitter 100 is emitted toward a second direction D2. A direction allowing emission of an electromagnetic wave from the transmitter 100 changes depending on time, and is synchronized with, for example, the first angular range AR.

An angle $\theta_2$ formed between the first direction D1 and the second direction D2 is wider than the first angular range AR ($\theta_1$), and is greater than one time of $\theta_1$ ($\theta_2 > \theta_1$) in one example. Consequently, even though an electromagnetic wave reflected from the first direction D1 and an electromagnetic wave reflected from the second direction D2 simultaneously reach the sensor device 10, the two electromagnetic waves are not simultaneously detected by the receiver 200.

The angle $\theta_2$ formed between the first direction D1 and the second direction D2 may be set to be somewhat narrow as long as the above-described condition ($\theta_2 > \theta_1$) is satisfied. Consequently, the number of electromagnetic waves emitted per unit time is increased.

Figs. 12 to 16 are diagrams for explaining an example of an operation of the sensor device 10 illustrated in Fig. 11. In Figs. 12 to 16, an arrow extending from the sensor device 10 indicates an electromagnetic wave emitted from the sensor device 10, an arrow extending from a target object OB1 indicates an electromagnetic wave reflected by the target object OB1, and an arrow extending from a target object OB2 indicates an electromagnetic wave reflected by the target object OB2. In this example, the target object OB1 is present at a position apart from the sensor device 10 in the first direction D1 by the distance 3D. The target object OB2 is present at a position apart from the sensor device 10 in the second direction D2 by the distance D. The distance D is less than the distance R1 (D<R1). The distance 3D is greater than the distance R2 (R2<3D). In this example, a sensing method using the sensor device 10 is performed as follows.

First, as illustrated in Fig. 12, at a time point t=0, an electromagnetic wave from the transmitter 100 is emitted toward the first direction D1. At the timing illustrated in this figure, the first direction D1 is deviated relative to the first angular range AR by the angle $\Delta\theta$ in the advancing direction (a clockwise direction in the example illustrated in this figure) of the first angular range AR.

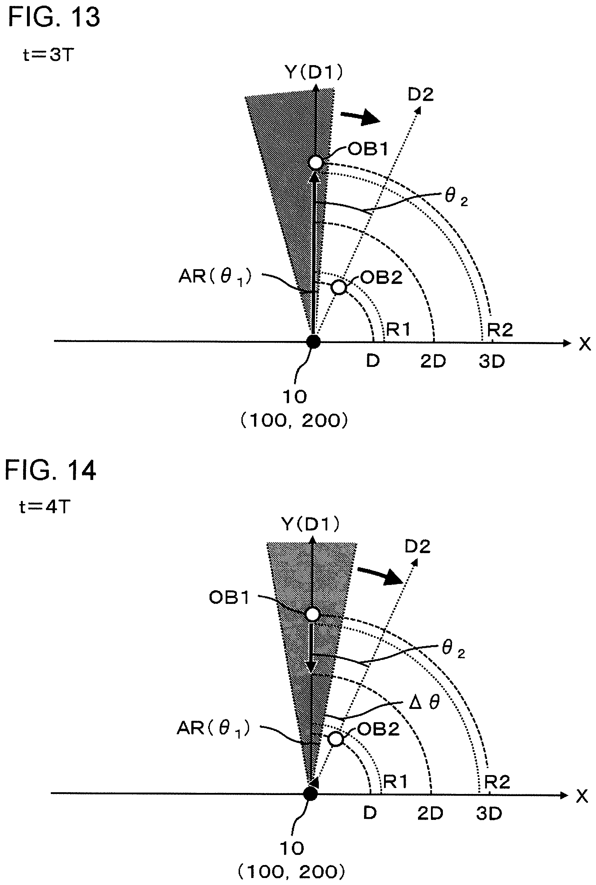

Next, as illustrated in Fig. 13, at a time point t=3T, the electromagnetic wave from the transmitter 100 reaches the target object OB1. In other words, in this example, a velocity of the electromagnetic wave is D/T.

Next, as illustrated in Fig. 14, at a time point t=4T, an electromagnetic wave from the transmitter 100 is emitted toward the second direction D2. At the time point t=4T, an electromagnetic wave reflected from the target object OB1 reaches a position apart from the sensor device 10 by the distance 2D. At the timing illustrated in this figure, the second direction D2 is deviated relative to the first angular range AR by the angle $\Delta\theta$ in the advancing direction (a clockwise direction in the example illustrated in this figure) of the first angular range AR.

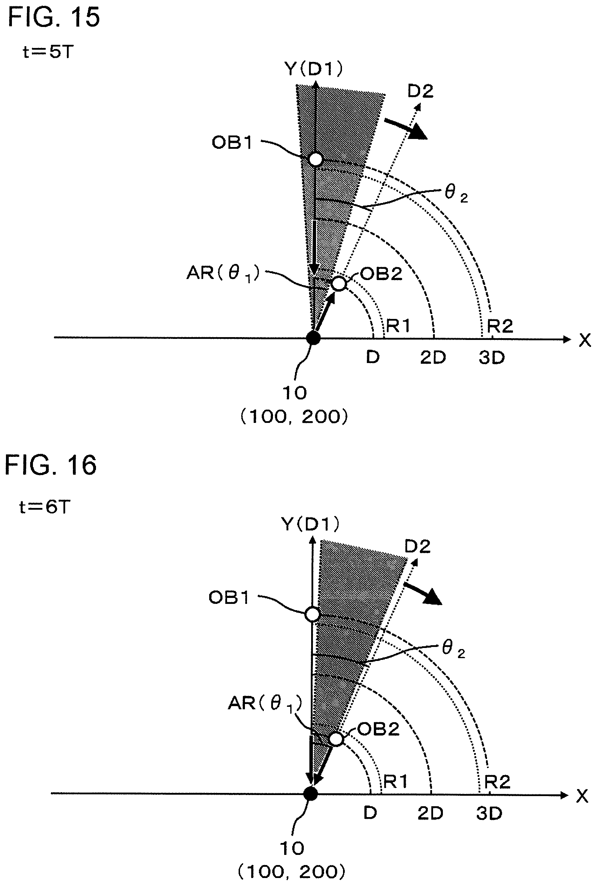

Next, as illustrated in Fig. 15, at a time point t=5T, the electromagnetic wave from the transmitter 100 reaches the target object OB2. At the time point t=5T, the electromagnetic wave reflected from the target object OB1 reaches a position apart from the sensor device 10 by the distance D.

Next, as illustrated in Fig. 16, at a time point t=6T, the electromagnetic wave reflected from the target object OB1 and the electromagnetic wave reflected from the target object OB2 simultaneously reach the sensor device 10. On the other hand, at the time point t=6T, the first angular range AR1 has already passed the first direction D1, and does not reach the second direction D2 yet. Thus, neither of the electromagnetic wave reflected from the target object OB1 and the electromagnetic wave reflected from the target object OB2 are detected by the receiver 200.

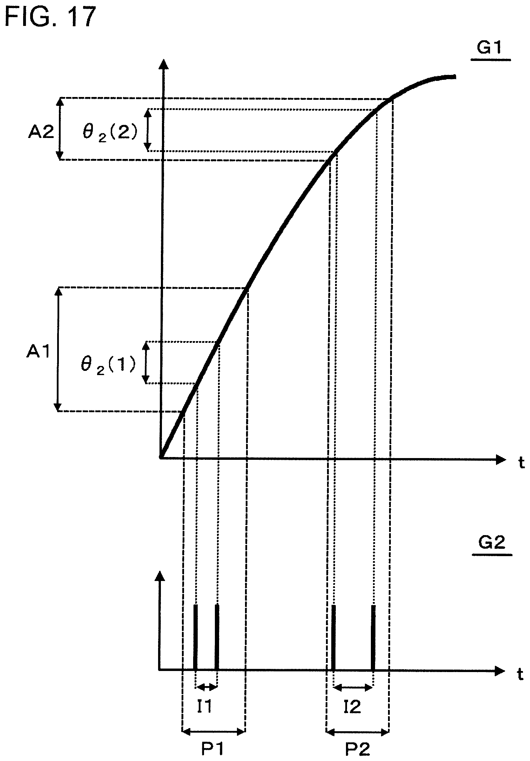

Fig. 17 is a diagram for explaining an example of a relationship between a direction allowing emission of an electromagnetic wave from the transmitter 100 and a timing of an electromagnetic wave emitted from the transmitter 100. An upper graph (graph G1) in this figure illustrates a direction allowing emission of an electromagnetic wave from the transmitter 100. A lower graph (graph G2) in this figure illustrates a timing of an electromagnetic wave emitted from the transmitter 100.

A direction allowing emission of an electromagnetic wave from the transmitter 100 changes depending on time, and oscillates within a predetermined range in the example illustrated in the graph G1. The graph G1 shows about 1/4 cycle of oscillation in the direction. As illustrated in the graph G1, angular velocity of the oscillation changes depending on time, and decreases over time in the region shown in the graph G1. In the graph G1, the direction changes by a first angle A1 in a first period P1, and changes by a second angle A2 in a second period P2. The duration of the second period P2 is the same as the duration of the first period P1. The second period P2 is deviated from the first period P1, and is a period later than the symbol P1 in the example illustrated in the graph G1. Thus, the second angle A2 is smaller than the first angle A1.

As illustrated in the graph G2, a time interval of an electromagnetic wave emitted from the transmitter 100 changes depending on time. Specifically, in the first period P1, an electromagnetic wave and the next electromagnetic wave from the transmitter 100 are emitted at a first time interval I1, and, in the second period P2, an electromagnetic wave and the next electromagnetic wave from the transmitter 100 are emitted at a second time interval I2. The second time interval I2 is longer than the first time interval I1. Consequently, an angle $\theta_2(2)$ formed between a direction of an electromagnetic wave emitted at the beginning of the second time interval I2 and a direction of an electromagnetic wave emitted at the end of the second time interval I2 can be the substantially same as an angle $\theta_2(1)$ formed between a direction of an electromagnetic wave emitted at the beginning of the first time interval I1 and a direction of an electromagnetic wave emitted at the end of the first time interval I1.

In the same manner as the angle $\theta_2$ illustrated in Fig. 11, both of the angles $\theta_2(1)$ and $\theta_2(2)$ are wider than the first angular range AR ($\theta_1$), Thus, even though an electromagnetic wave emitted at the beginning of the first time interval I1 and an electromagnetic wave emitted at the end of the first time interval I1 simultaneously return to the sensor device 10, the two electromagnetic waves are not detected by the receiver 200. Similarly, even though an electromagnetic wave emitted at the beginning of the second time interval I2 and an electromagnetic wave emitted at the end of the second time interval I2 simultaneously return to the sensor device 10, the two electromagnetic waves are not detected by the receiver 200.

In the same manner as the angle $\theta_2$ illustrated in Fig. 11, both of the angles $\theta_2(1)$ and $\theta_2(2)$ are somewhat narrow. Thus, the number of electromagnetic waves emitted per unit time is increased.

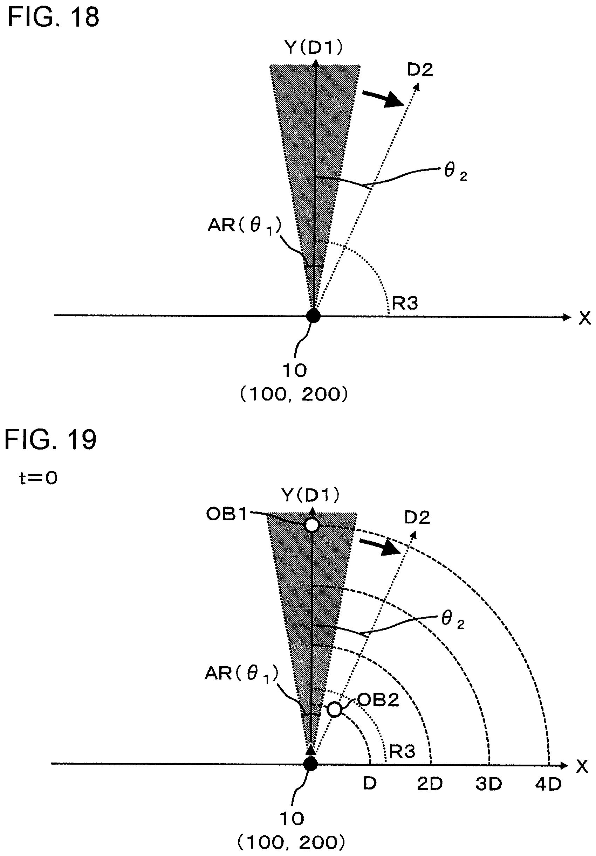

Fig. 18 is a diagram illustrating a modification example of Fig. 11. In the example illustrated in Fig. 18, an electromagnetic wave from the transmitter 100 is emitted toward the inside of the first angular range AR, specifically, toward the center of the first angular range AR. Specifically, at a timing illustrated in this figure, the first angular range AR overlaps the Y axis. At this timing, the electromagnetic wave from the transmitter 100 is emitted toward the first direction D1, and, in the example illustrated in this figure, the first direction D1 is along the Y axis. In the above-described way, in the example illustrated in this figure, the electromagnetic wave from the transmitter 100 is emitted toward the center of the first angular range AR.

The receiver 200 can detect an electromagnetic wave reflected at a position apart from the sensor device 10 by a predetermined distance or less, specifically, an electromagnetic wave reflected at a position apart from the sensor device 10 by a distance R3 or less. Specifically, in a case where an electromagnetic wave is emitted at the timing illustrated in this figure, when the electromagnetic wave is reflected at a position apart from the sensor device 10 by the distance R3 or less, the electromagnetic wave reaches the sensor device 10 before the first angular range AR reaches the Y axis. In other words, the following Expression (4) is satisfied.

$$\frac{\theta_1}{2} \geq \int_0^{2R/c} \omega \mathrm{d}t \quad \left(0 \leq R \leq R3\right) \quad (4)$$

Consequently, an electromagnetic wave reflected at a position apart from the sensor device 10 by a predetermined distance or less is detected by the receiver 200.

The receiver 200 cannot detect an electromagnetic wave reflected at a position apart from the sensor device 10 by greater than a predetermined distance, specifically, an electromagnetic wave reflected at a position apart from the sensor device 10 by greater than the distance R3. Specifically, in a case where an electromagnetic wave is emitted at the timing illustrated in this figure, when the electromagnetic wave is reflected at a position apart from the sensor device 10 by greater than the distance R3, the electromagnetic wave reaches the sensor device 10 after the first angular range AR passes the Y axis. In other words, the following Expression (5) is satisfied.

$$\frac{\theta_1}{2} < \int_0^{2R/c} \omega \mathrm{d}t \quad \left(R3 < R\right) \quad (5)$$

Consequently, an electromagnetic wave reflected at a position apart from the sensor device 10 by greater than a predetermined distance is not detected by the receiver 200.

In the example illustrated in this figure, an electromagnetic wave from the transmitter 100 is emitted toward the first direction D1, and the next electromagnetic wave from the transmitter 100 is emitted toward the second direction D2. A direction allowing emission of an electromagnetic wave from the transmitter 100 changes depending on time, and is synchronized with, for example, the first angular range AR.

In the same manner as in the example illustrated in Fig. 11, the angle $\theta_2$ formed between the first direction D1 and the second direction D2 is wider than the first angular range AR ($\theta_1$). Consequently, even though an electromagnetic wave reflected from the first direction D1 and an electromagnetic wave reflected from the second direction D2 simultaneously reach the sensor device 10, the two electromagnetic waves are not simultaneously detected by the receiver 200.

In the same manner as in the example illustrated in Fig. 11, the angles $\theta_2$ formed between the first direction D1 and the second direction D2 is somewhat narrow. Thus, the number of electromagnetic waves emitted per unit time is increased.

Figs. 19 to 23 are diagrams for explaining an example of an operation of the sensor device 10 illustrated in Fig. 18. In Figs. 19 to 23, an arrow extending from the sensor device 10 indicates an electromagnetic wave emitted from the sensor device 10, an arrow extending from the target object OB1 indicates an electromagnetic wave reflected by the target object OB1, and an arrow extending from the target object OB2 indicates an electromagnetic wave reflected by the target object OB2. In this example, the target object OB1 is present at a position apart from the sensor device 10 in the first direction D1 by a distance 4D. The target object OB2 is present at a position apart from the sensor device 10 in the second direction D2 by the distance D. The distance D is equal to or less than the distance R3 ($D \leq R3$). The distance 4D is greater than the distance R3 (R3<4D). In this example, a sensing method using the sensor device 10 is performed as follows.

First, as illustrated in Fig. 19, at a time point t=0, an electromagnetic wave from the transmitter 100 is emitted toward the first direction D1. At the timing illustrated in this figure, the first direction D1 overlaps the central direction of the first angular range AR.

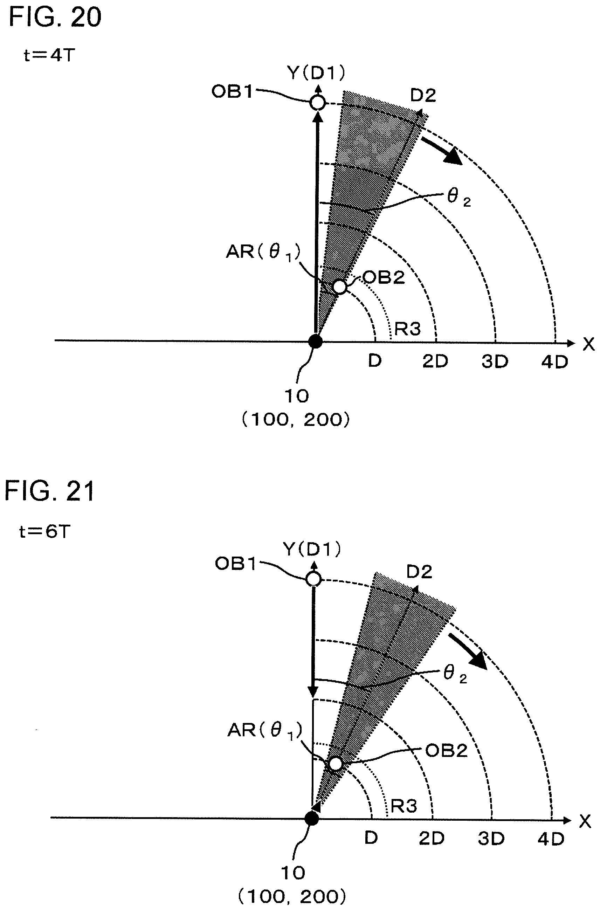

Next, as illustrated in Fig. 20, at a time point t=4T, the electromagnetic wave from the transmitter 100 reaches the target object OB1. In other words, in this example, a velocity of the electromagnetic wave is D/T.

Next, as illustrated in Fig. 21, at a time point t=6T, an electromagnetic wave from the transmitter 100 is emitted toward the second direction D2. At the time point t=6T, an electromagnetic wave reflected from the target object OB1 reaches a position apart from the sensor device 10 by the distance 2D. At the timing illustrated in this figure, the second direction D2 overlaps the central direction of the first angular range AR.

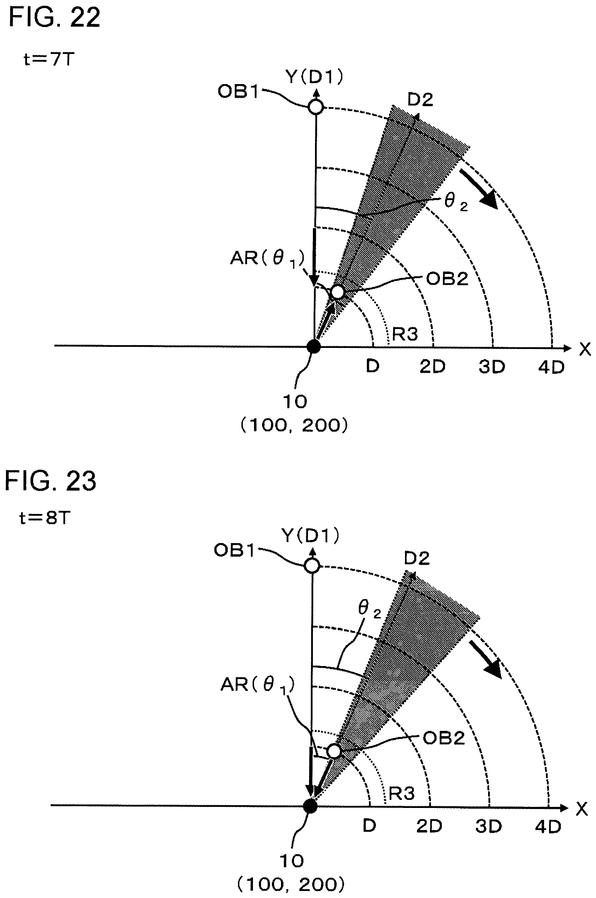

Next, as illustrated in Fig. 22, at a time point t=7T, the electromagnetic wave from the transmitter 100 reaches the target object OB2. At the time point t=7T, the electromagnetic wave reflected from the target object OB1 reaches a position apart from the sensor device 10 by the distance D.

Next, as illustrated in Fig. 23, at a time point t=8T, the electromagnetic wave reflected from the target object OB1 and the electromagnetic wave reflected from the target object OB2 simultaneously reach the sensor device 10. On the other hand, at the time point t=8T, the first angular range AR1 has already passed the first direction D1, and overlaps the second direction D2. Thus, the electromagnetic wave reflected from the target object OB1 is not detected by the receiver 200, and the electromagnetic wave reflected from the target object OB2 is detected by the receiver 200. In other words, the receiver 200 does not simultaneously detect the two electromagnetic waves.

As mentioned above, according to this embodiment, an electromagnetic wave reflected at a position somewhat close to the sensor device 10 is not detected by the receiver 200, and an electromagnetic wave reflected at a position somewhat far away from the sensor device 10 is detected by the receiver 200. Thus, an electromagnetic wave reflected at a position somewhat close to the sensor device 10 and an electromagnetic wave reflected at a position somewhat far away from the sensor device 10 are not simultaneously detected by the receiver 200.

EXAMPLES

(Example 1)

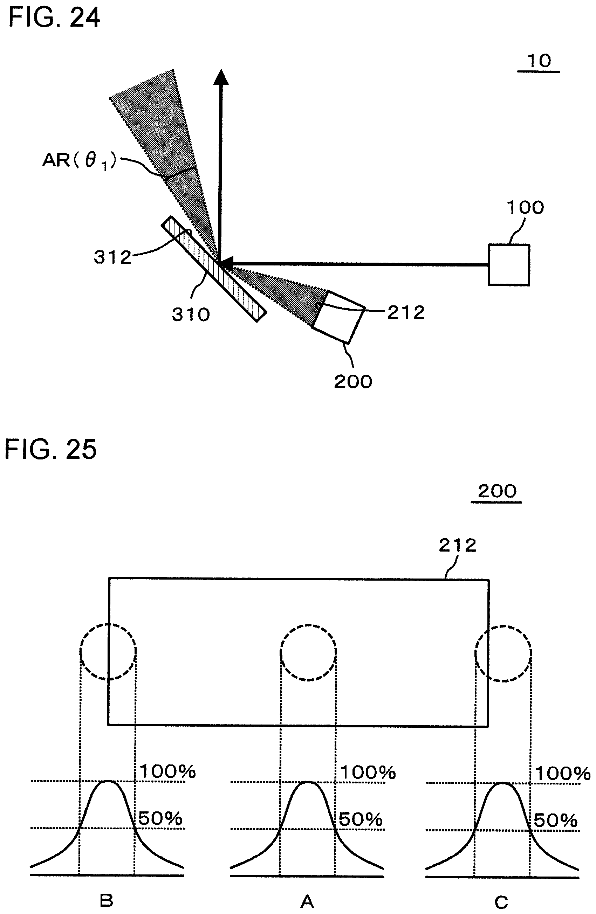

Fig. 24 is a diagram illustrating the sensor device 10 according to Example 1, and corresponds to Fig. 1 of the embodiment.

The sensor device 10 includes the transmitter 100, the receiver 200, and a movable reflector 310. The transmitter 100 is, for example, an LD. The receiver 200 is, for example, an APD, and has a surface 212. The receiver 200 is capable of detecting an electromagnetic wave irradiated to the surface 212. The movable reflector 310 is, for example, a micro-electromechanical systems (MEMS) oscillation mirror, and has a first surface 312. The movable reflector 310 is capable of reflecting an electromagnetic wave by the first surface 312. In one example, angular velocity of oscillation of the movable reflector 310 (first surface 312) changes depending on time as illustrated in the graph G1 of Fig. 17.

An electromagnetic wave from the transmitter 100 is reflected by the first surface 312 of the movable reflector 310, and is emitted toward the outside of the sensor device 10. The electromagnetic wave reflected by the target object OB is reflected by the first surface 312 of the movable reflector 310, and is received (light-received) by the receiver 200. Here, in a case where the electromagnetic wave reflected by the target object OB is included in the first angular range AR (that is, a receivable range of the receiver 200), the electromagnetic wave is received by the receiver 200. In other words, the receiver 200 is located so as to enable detection (receipt) of an electromagnetic wave from a direction different from a direction in which an electromagnetic wave from the transmitter 100 is emitted. Consequently, an electromagnetic wave from the transmitter 100 is emitted toward the outside of the first angular range AR. A direction allowing emission of an electromagnetic wave from the transmitter 100 is synchronized with the first angular range AR.

Fig. 25 is a diagram for explaining an example of a method in which the receiver 200 illustrated in Fig. 24 detects an electromagnetic wave. In the example illustrated in this figure, the receiver 200 is capable of detecting an electromagnetic wave A and an electromagnetic wave B, and is incapable of detecting an electromagnetic wave C. Specifically, in a case where the center of an electromagnetic wave overlaps the surface 212, the receiver 200 is capable of detecting the electromagnetic wave.

In the example illustrated in this figure, the entire spot of a full width at half maximum of the electromagnetic wave A overlaps the surface 212, and thus the center of the electromagnetic wave A overlaps the surface 212. Consequently, the receiver 200 is capable of detecting the electromagnetic wave A.

In the example illustrated in this figure, a part (substantially half) of a spot of a full width at half maximum of the electromagnetic wave B does not overlap the surface 212, but the center of the electromagnetic wave B overlaps the surface 212. Consequently, the receiver 200 is capable of detecting the electromagnetic wave B.

In the example illustrated in this figure, most of a spot of a full width at half maximum of the electromagnetic wave C does not overlap the surface 212, and the center of the electromagnetic wave C does not overlap the surface 212. Consequently, the receiver 200 is incapable of detecting the electromagnetic wave C.

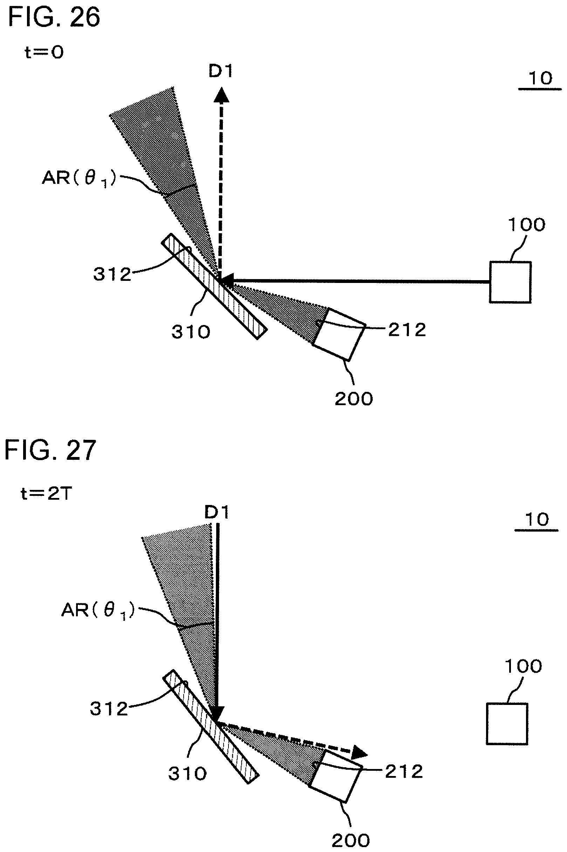

Figs. 26 to 29 are diagrams for explaining an example of an operation of the sensor device 10 illustrated in Fig. 24. In this example, a sensing method using the sensor device 10 is performed as follows.

In a case where the sensor device 10 according to the embodiment is the same as the sensor device 10 according to this example, in the example illustrated in Figs. 2 to 4, the sensor device 10 is operated as illustrated in Fig. 26 at the timing illustrated in Fig. 2, and is operated as illustrated in Fig. 27 at the timing illustrated in Fig. 4.

First, as illustrated in Fig. 26, at a time point t=0, an electromagnetic wave from the transmitter 100 is reflected by the first surface 312 of the movable reflector 310. Consequently, the electromagnetic wave from the transmitter 100 is emitted toward the first direction D1.

Next, as illustrated in Fig. 27, at a time point t=2T, an electromagnetic wave from the first direction D1 is reflected by the first surface 312 of the movable reflector 310. The electromagnetic wave is not irradiated to the surface 212 of the receiver 200, and is deviated toward one side of the surface 212 from the surface 212. Consequently, the electromagnetic wave is not detected by the receiver 200. Note that the electromagnetic wave illustrated in Fig. 27 is an electromagnetic wave reflected by the target object OB in a case where the target object OB is present at a position close to the sensor device 10 (in a case where the target object OB is present at a position apart by less than the distance R1 as in Figs. 2 to 4 of the embodiment).

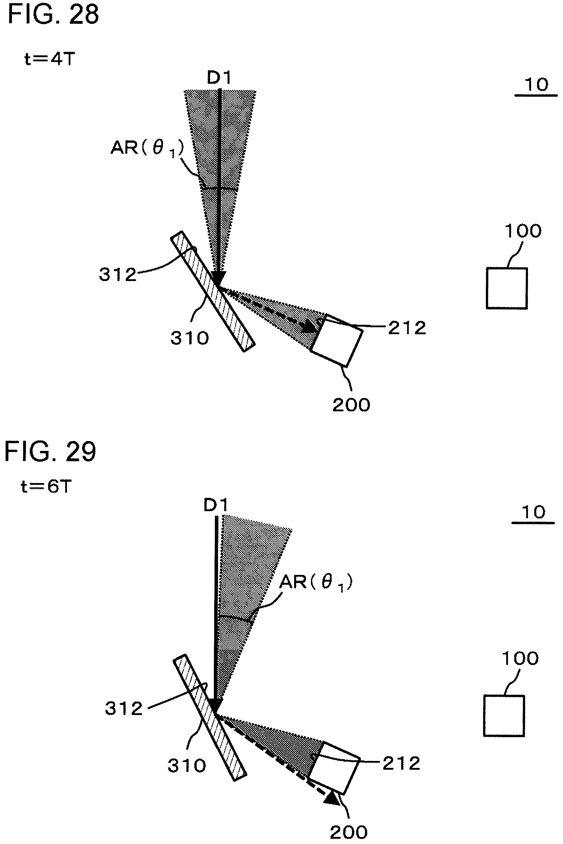

In a case where the sensor device 10 according to the embodiment is the same as the sensor device 10 according to this example, in the example illustrated in Figs. 5 to 7, the sensor device 10 is operated as illustrated in Fig. 26 at the timing illustrated in Fig. 5, and is operated as illustrated in Fig. 28 at the timing illustrated in Fig. 7.

First, as illustrated in Fig. 26, at a time point t=0, an electromagnetic wave from the transmitter 100 is reflected by the first surface 312 of the movable reflector 310. Consequently, the electromagnetic wave from the transmitter 100 is emitted toward the first direction D1.

Next, as illustrated in Fig. 28, at a time point t=4T, an electromagnetic wave from the first direction D1 is reflected by the first surface 312 of the movable reflector 310. The electromagnetic wave is irradiated to the surface 212 of the receiver 200. Consequently, the electromagnetic wave is detected by the receiver 200. Note that the electromagnetic wave illustrated in Fig. 28 is an electromagnetic wave reflected by the target object OB in a case where the target object OB is present within a detectable range of the sensor device 10 (in a case where the target object OB is present at a position apart by the distance R1 or greater and the distance R2 or less as in Figs. 5 to 7 of the embodiment).

In a case where the sensor device 10 according to the embodiment is the same as the sensor device 10 according to this example, in the example illustrated in Figs. 8 to 10, the sensor device 10 is operated as illustrated in Fig. 26 at the timing illustrated in Fig. 8, and is operated as illustrated in Fig. 29 at the timing illustrated in Fig. 10.

First, as illustrated in Fig. 26, at a time point t=0, an electromagnetic wave from the transmitter 100 is reflected by the first surface 312 of the movable reflector 310. Consequently, the electromagnetic wave from the transmitter 100 is emitted toward the first direction D1.

Next, as illustrated in Fig. 29, at a time point t=6T, an electromagnetic wave from the first direction D1 is reflected by the first surface 312 of the movable reflector 310. The electromagnetic wave is not irradiated to the surface 212 of the receiver 200, and is deviated toward the other side of the surface 212 from the surface 212. Consequently, the electromagnetic wave is not detected by the receiver 200. Note that the electromagnetic wave illustrated in Fig. 29 is an electromagnetic wave reflected by the target object OB in a case where the target object OB is present at a position considerably far away from the sensor device 10 (in a case where the target object OB is present at a position apart by greater than the distance R2 as in Figs. 8 to 10 of the embodiment).

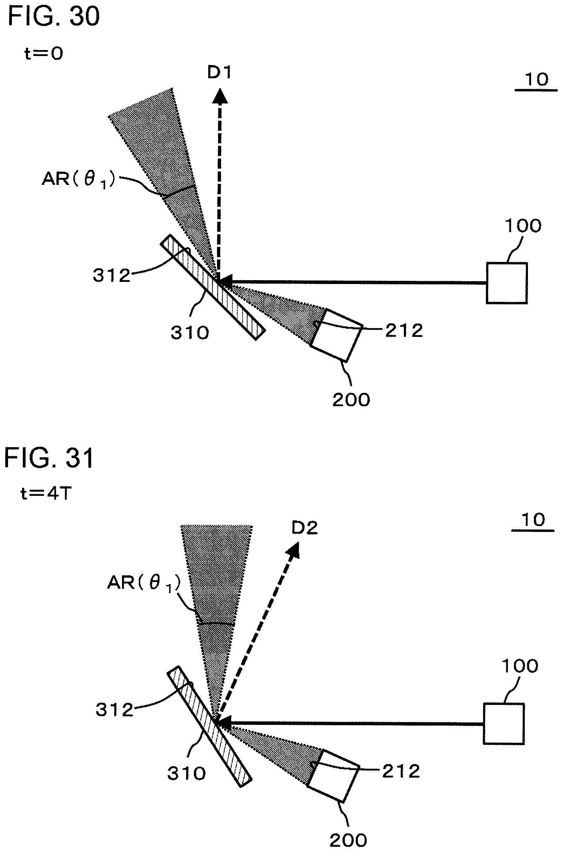

Figs. 30 to 32 are diagrams for explaining an example of a timing at which an electromagnetic wave is emitted from the sensor device 10 illustrated in Fig. 24. In this example, a sensing method using the sensor device 10 is performed as follows.

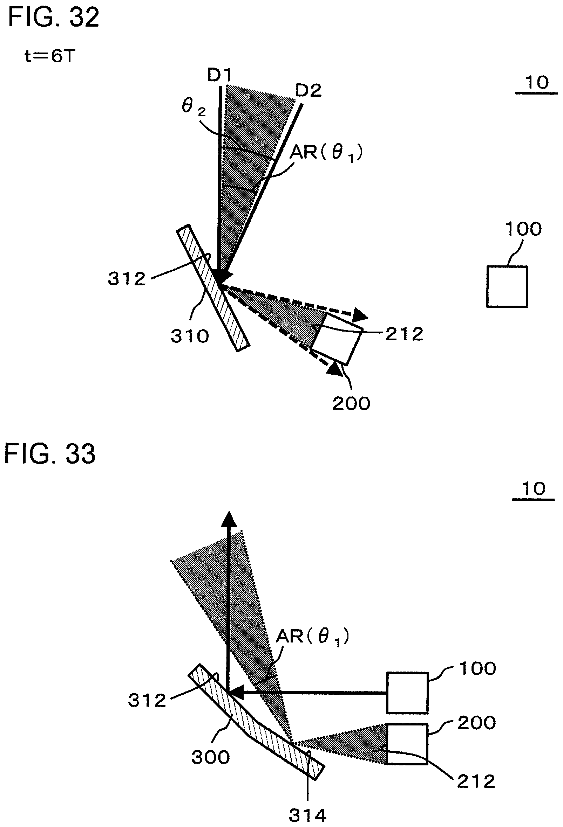

In a case where the sensor device 10 according to the embodiment is the same as the sensor device 10 according to this example, in the example illustrated in Figs. 12 to 16, the sensor device 10 is operated as illustrated in Fig. 30 at the timing illustrated in Fig. 12, and is operated as illustrated in Fig. 31 at the timing illustrated in Fig. 14, and is operated as illustrated in Fig. 32 at the timing illustrated in Fig. 16.

First, as illustrated in Fig. 30, at a time point t=0, an electromagnetic wave from the transmitter 100 is reflected by the first surface 312 of the movable reflector 310. Consequently, the electromagnetic wave from the transmitter 100 is emitted toward the first direction D1.

Next, as illustrated in Fig. 31, at a time point t=4T, an electromagnetic wave from the transmitter 100 is reflected by the first surface 312 of the movable reflector 310. Consequently, the electromagnetic wave from the transmitter 100 is emitted toward the second direction D2.

Next, as illustrated in Fig. 32, at a time point t=6T, an electromagnetic wave from the first direction D1 and an electromagnetic wave from the second direction D2 are reflected by the first surface 312. The electromagnetic wave from the second direction D2 is not irradiated to the surface 212 of the receiver 200, and is deviated toward one side of the surface 212 from the surface 212. The electromagnetic wave from the first direction D1 is not irradiated to the surface 212 of the receiver 200, and is deviated toward the other side of the surface 212 from the surface 212. Consequently, the electromagnetic waves are not detected by the receiver 200. Note that the electromagnetic wave from the first direction D1 illustrated in Fig. 32 is an electromagnetic wave reflected by the target object OB in a case where the target object OB is present at a position considerably far away from the sensor device 10 (in a case where the target object OB is present at a position apart by greater than the distance R2 as in Figs. 8 to 10 of the embodiment), and the electromagnetic wave from the second direction D2 illustrated in Fig. 32 is an electromagnetic wave reflected by the target object OB in a case where the target object OB is present at a position close to the sensor device 10 (in a case where the target object OB is present at a position apart by less than the distance R1 as in Figs. 2 to 4 of the embodiment).

(Example 2)

Fig. 33 is a diagram illustrating the sensor device 10 according to Example 2, and corresponds to Fig. 1 of the embodiment. The sensor device 10 according to this example is the same as the sensor device 10 according to the embodiment except for the following contents.

The sensor device 10 includes the transmitter 100, the receiver 200, and a movable reflector 310. The transmitter 100 is, for example, an LD. The receiver 200 is, for example, an APD, and has a surface 212. The receiver 200 is capable of detecting an electromagnetic wave irradiated to the surface 212. The movable reflector 310 is, for example, a micro-electromechanical systems (MEMS) oscillation mirror, and has a first surface 312 and a second surface 314. The second surface 314 is oriented in a direction different from that of the first surface 312. The movable reflector 310 is capable of reflecting an electromagnetic wave by the first surface 312 or the second surface 314.

An electromagnetic wave from the transmitter 100 is reflected by the first surface 312 of the movable reflector 310 toward the outside of the sensor device 10. An electromagnetic wave from the first angular range AR is reflected by the second surface 314 of the movable reflector 310 toward the receiver 200. In other words, the receiver 200 is located so as to enable detection (receipt) of an electromagnetic wave from a direction different from a direction in which an electromagnetic wave from the transmitter 100 is emitted. Consequently, an electromagnetic wave from the transmitter 100 is emitted toward the outside of the first angular range AR. A direction allowing emission of an electromagnetic wave from the transmitter 100 is synchronized with the first angular range AR.

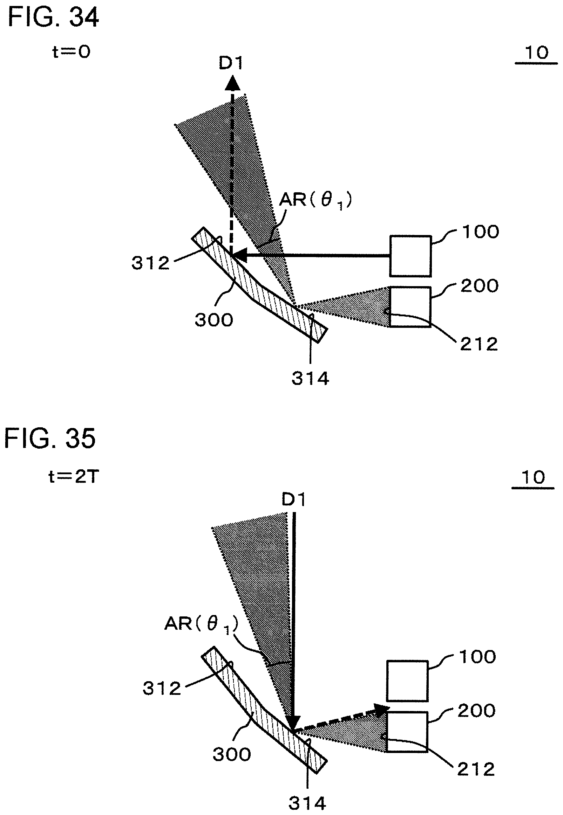

Figs. 34 to 37 are diagrams for explaining an example of an operation of the sensor device 10 illustrated in Fig. 33. In this example, a sensing method using the sensor device 10 is performed as follows.

In a case where the sensor device 10 according to the embodiment is the same as the sensor device 10 according to this example, in the example illustrated in Figs. 2 to 4, the sensor device 10 is operated as illustrated in Fig. 34 at the timing illustrated in Fig. 2, and is operated as illustrated in Fig. 35 at the timing illustrated in Fig. 4.

First, as illustrated in Fig. 34, at a time point t=0, an electromagnetic wave from the transmitter 100 is reflected by the first surface 312 of the movable reflector 310. Consequently, the electromagnetic wave from the transmitter 100 is emitted toward the first direction D1.

Next, as illustrated in Fig. 35, at a time point t=2T, an electromagnetic wave from the first direction D1 is reflected by the second surface 314 of the movable reflector 310. The electromagnetic wave is not irradiated to the surface 212 of the receiver 200, and is deviated toward one side of the surface 212 from the surface 212. Consequently, the electromagnetic wave is not detected by the receiver 200.

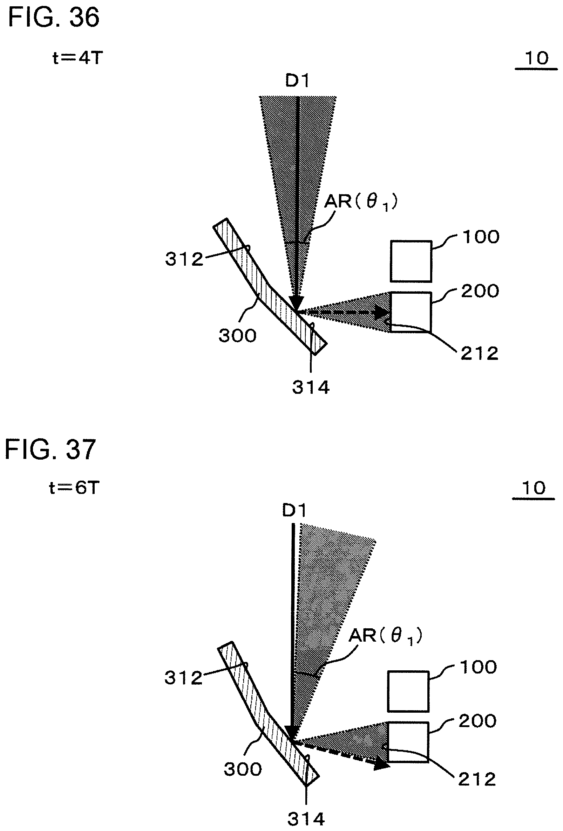

In a case where the sensor device 10 according to the embodiment is the same as the sensor device 10 according to this example, in the example illustrated in Figs. 5 to 7, the sensor device 10 is operated as illustrated in Fig. 34 at the timing illustrated in Fig. 5, and is operated as illustrated in Fig. 36 at the timing illustrated in Fig. 7.

First, as illustrated in Fig. 34, at a time point t=0, an electromagnetic wave from the transmitter 100 is reflected by the first surface 312 of the movable reflector 310. Consequently, the electromagnetic wave from the transmitter 100 is emitted toward the first direction D1.

Next, as illustrated in Fig. 36, at a time point t=4T, an electromagnetic wave from the first direction D1 is reflected by the second surface 314 of the movable reflector 310. The electromagnetic wave is irradiated to the surface 212 of the receiver 200. Consequently, the electromagnetic wave is detected by the receiver 200.

In a case where the sensor device 10 according to the embodiment is the same as the sensor device 10 according to this example, in the example illustrated in Figs. 8 to 10, the sensor device 10 is operated as illustrated in Fig. 34 at the timing illustrated in Fig. 8, and is operated as illustrated in Fig. 37 at the timing illustrated in Fig. 10.

First, as illustrated in Fig. 34, at a time point t=0, an electromagnetic wave from the transmitter 100 is reflected by the first surface 312 of the movable reflector 310. Consequently, the electromagnetic wave from the transmitter 100 is emitted toward the first direction D1.

Next, as illustrated in Fig. 37, at a time point t=6T, an electromagnetic wave from the first direction D1 is reflected by the second surface 314 of the movable reflector 310. The electromagnetic wave is not irradiated to the surface 212 of the receiver 200, and is deviated toward the other side of the surface 212 from the surface 212. Consequently, the electromagnetic wave is not detected by the receiver 200.

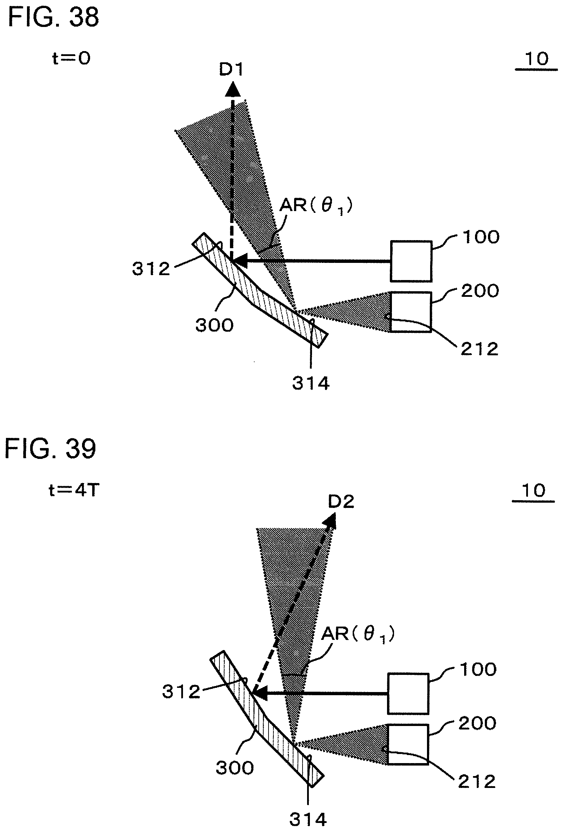

Figs. 38 to 40 are diagrams for explaining an example of a timing at which an electromagnetic wave is emitted from the sensor device 10 illustrated in Fig. 33. In this example, a sensing method using the sensor device 10 is performed as follows.

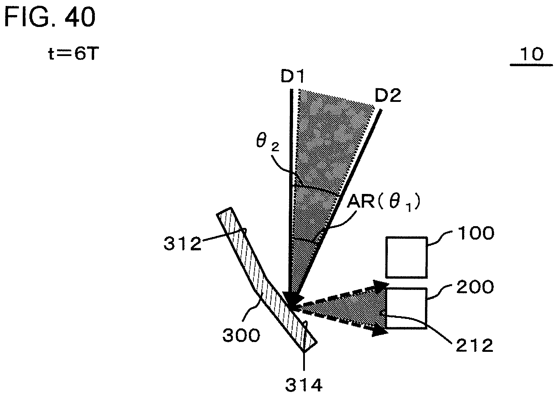

In a case where the sensor device 10 according to the embodiment is the same as the sensor device 10 according to this example, in the example illustrated in Figs. 12 to 16, the sensor device 10 is operated as illustrated in Fig. 38 at the timing illustrated in Fig. 12, and is operated as illustrated in Fig. 39 at the timing illustrated in Fig. 14, and is operated as illustrated in Fig. 40 at the timing illustrated in Fig. 16.

First, as illustrated in Fig. 38, at a time point t=0, an electromagnetic wave from the transmitter 100 is reflected by the first surface 312 of the movable reflector 310. Consequently, the electromagnetic wave from the transmitter 100 is emitted toward the first direction D1.

Next, as illustrated in Fig. 39, at a time point t=4T, an electromagnetic wave from the transmitter 100 is reflected by the first surface 312 of the movable reflector 310. Consequently, the electromagnetic wave from the transmitter 100 is emitted toward the second direction D2.

Next, as illustrated in Fig. 40, at a time point t=6T, an electromagnetic wave from the first direction D1 and an electromagnetic wave from the second direction D2 are reflected by the second surface 314. The electromagnetic wave from the second direction D2 is not irradiated to the surface 212 of the receiver 200, and is deviated toward one side of the surface 212 from the surface 212. The electromagnetic wave from the first direction D1 is not irradiated to the surface 212 of the receiver 200, and is deviated toward the other side of the surface 212 from the surface 212. Consequently, the electromagnetic waves are not detected by the receiver 200.

(Example 3)

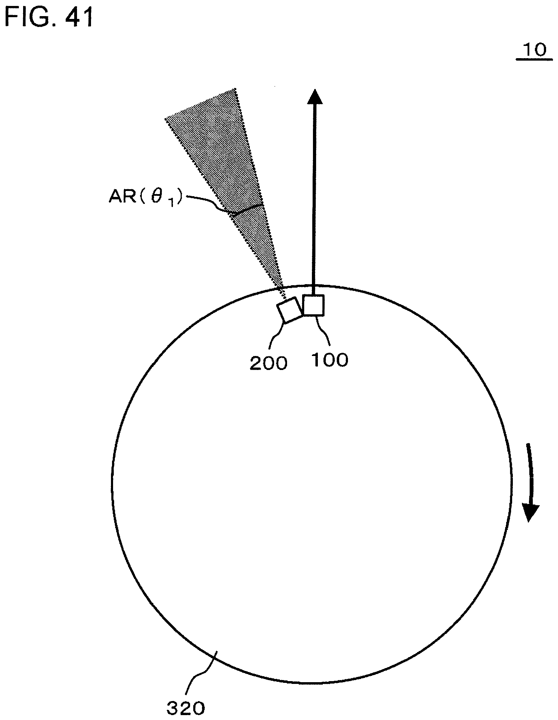

Fig. 41 is a diagram illustrating the sensor device 10 according to Example 3, and corresponds to Fig. 1 of the embodiment. The sensor device 10 according to this example is the same as the sensor device 10 according to the embodiment except for the following contents.

The sensor device 10 includes the transmitter 100, the receiver 200, and a rotor 320. The transmitter 100 is, for example, an LD. The receiver 200 is, for example, an APD. The transmitter 100 and the receiver 200 are mounted on the rotor 320. Consequently, the transmitter 100 and the receiver 200 are rotated about a rotation axis of the rotor 320 at the same angular velocity as angular velocity of the rotor 320. In other words, the rotor 320 functions as a driver to rotate the transmitter 100 and the receiver 200. In the above-described way, a direction allowing emission of an electromagnetic wave from the transmitter 100 is synchronized with the first angular range AR. In one example, the angular velocity of the rotor 320 is constant regardless of time.

The transmitter 100 and the receiver 200 are mounted on the rotor 320 such that a direction allowing emission of an electromagnetic wave from the transmitter 100 and the first angular range AR of the receiver 200 are oriented toward the outside of the sensor device 10. Thus, in a case where the rotor 320 rotates, the transmitter 100 and the receiver 200 are rotated with a direction allowing emission of an electromagnetic wave from the transmitter 100, and the first angular range AR of the receiver 200 oriented toward the outside of the sensor device 10.

The transmitter 100 and the receiver 200 are mounted on the rotor 320 such that a direction allowing emission of an electromagnetic wave from the transmitter 100 is oriented toward the outside of the first angular range AR of the receiver 200. Consequently, an electromagnetic wave from the transmitter 100 is emitted toward the outside of the first angular range AR.

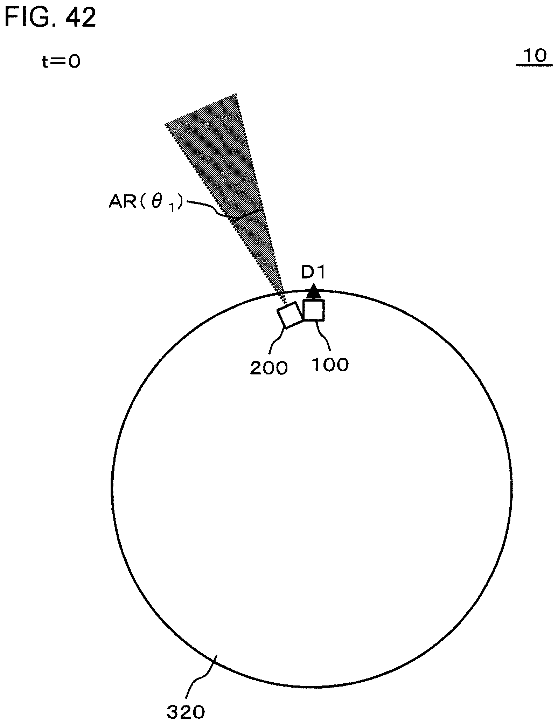

Figs. 42 to 45 are diagrams for explaining an example of an operation of the sensor device 10 illustrated in Fig. 41. In this example, a sensing method using the sensor device 10 is performed as follows.

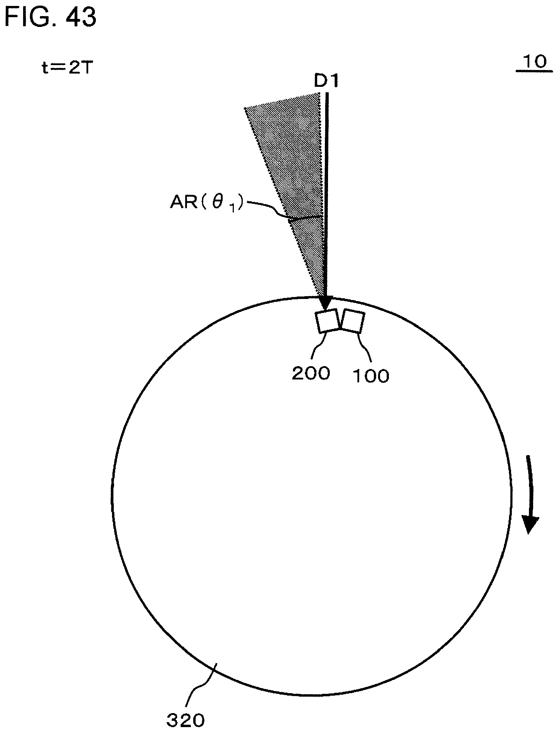

In a case where the sensor device 10 according to the embodiment is the same as the sensor device 10 according to this example, in the example illustrated in Figs. 2 to 4, the sensor device 10 is operated as illustrated in Fig. 42 at the timing illustrated in Fig. 2, and is operated as illustrated in Fig. 43 at the timing illustrated in Fig. 4.

First, as illustrated in Fig. 42, at a time point t=0, an electromagnetic wave from the transmitter 100 is emitted toward the first direction D1.

Next, as illustrated in Fig. 43, at a time point t=2T, an electromagnetic wave from the first direction D1 reaches the receiver 200. At the time point t=2T, the first angular range AR does not reach the first direction D1 yet. Consequently, the electromagnetic wave is not detected by the receiver 200.

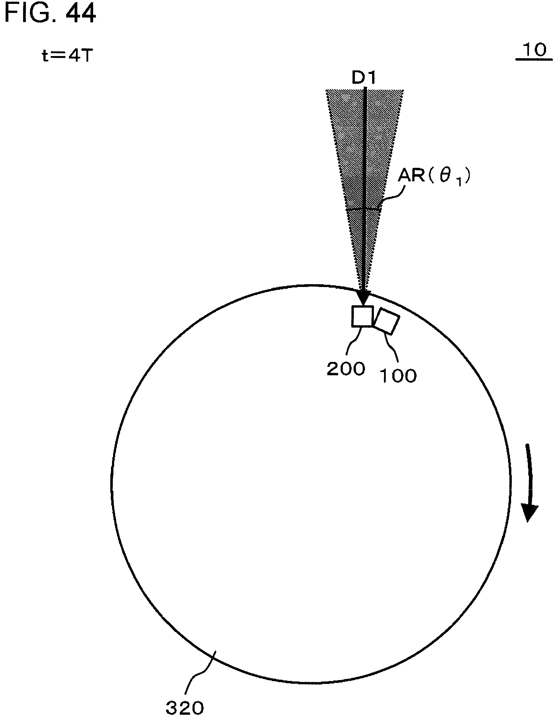

In a case where the sensor device 10 according to the embodiment is the same as the sensor device 10 according to this example, in the example illustrated in Figs. 5 to 7, the sensor device 10 is operated as illustrated in Fig. 42 at the timing illustrated in Fig. 5, and is operated as illustrated in Fig. 44 at the timing illustrated in Fig. 7.

First, as illustrated in Fig. 42, at a time point t=0, an electromagnetic wave from the transmitter 100 is emitted toward the first direction D1.

Next, as illustrated in Fig. 44, at a time point t=4T, an electromagnetic wave from the first direction D1 reaches the receiver 200. At the time point t=4T, the first angular range AR overlaps the first direction D1. Consequently, the electromagnetic wave is detected by the receiver 200.

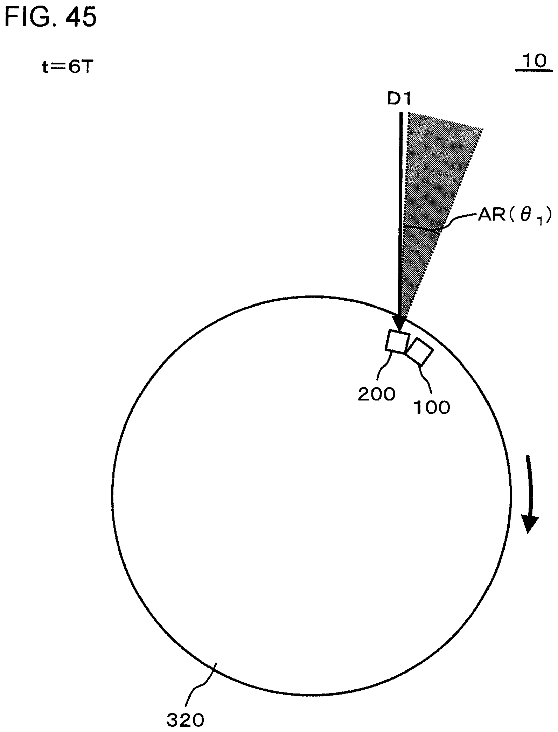

In a case where the sensor device 10 according to the embodiment is the same as the sensor device 10 according to this example, in the example illustrated in Figs. 8 to 10, the sensor device 10 is operated as illustrated in Fig. 42 at the timing illustrated in Fig. 8, and is operated as illustrated in Fig. 45 at the timing illustrated in Fig. 10.

First, as illustrated in Fig. 42, at a time point t=0, an electromagnetic wave from the transmitter 100 is emitted toward the first direction D1.

Next, as illustrated in Fig. 45, at a time point t=6T, an electromagnetic wave from the first direction D1 reaches the receiver 200. At the time point t=6T, the first angular range AR has already passed the first direction D1. Consequently, the electromagnetic wave is not detected by the receiver 200.

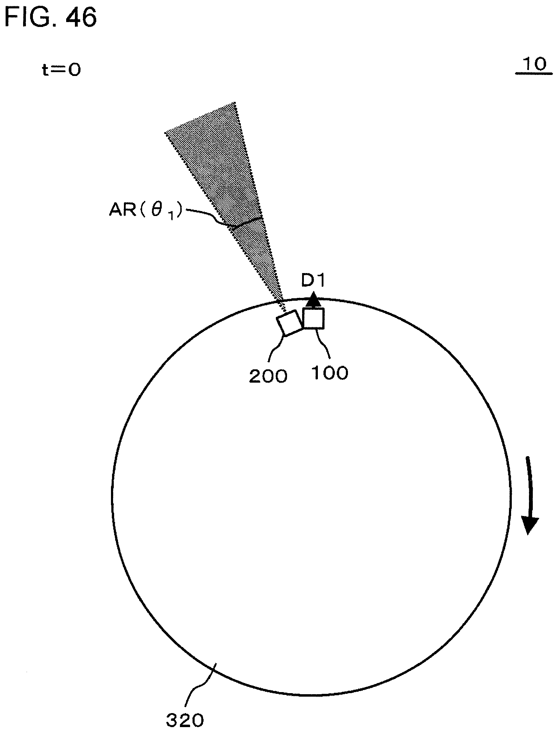

Figs. 46 to 48 are diagrams for explaining an example of a timing at which an electromagnetic wave is emitted from the sensor device 10 illustrated in Fig. 41. In this example, a sensing method using the sensor device 10 is performed as follows.

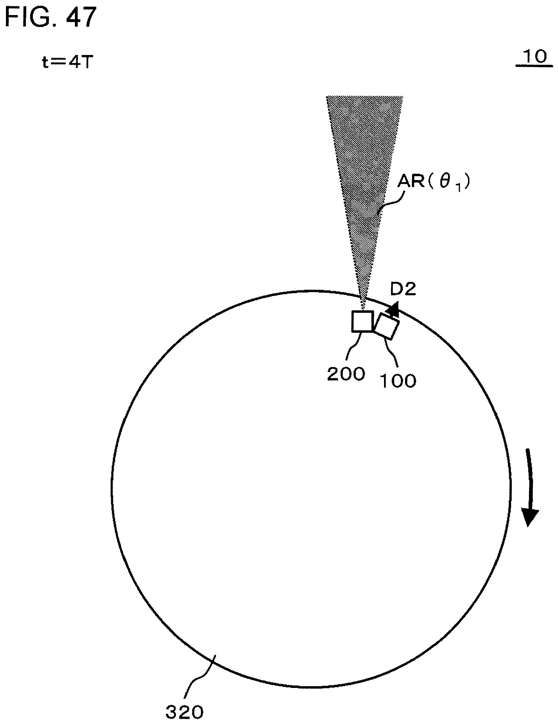

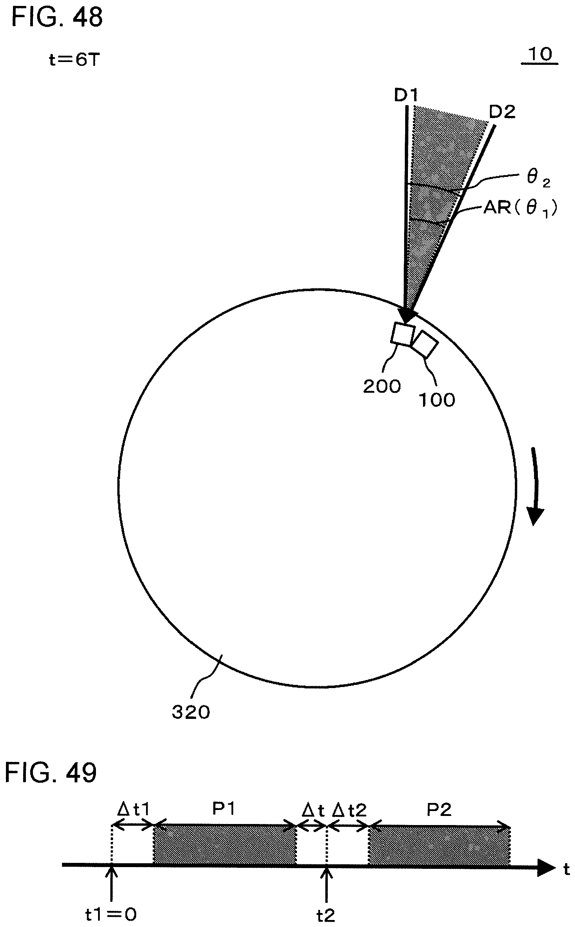

In a case where the sensor device 10 according to the embodiment is the same as the sensor device 10 according to this example, in the example illustrated in Figs. 12 to 16, the sensor device 10 is operated as illustrated in Fig. 46 at the timing illustrated in Fig. 12, and is operated as illustrated in Fig. 47 at the timing illustrated in Fig. 14, and is operated as illustrated in Fig. 48 at the timing illustrated in Fig. 16.

First, as illustrated in Fig. 46, at a time point t=0, an electromagnetic wave from the transmitter 100 is emitted toward the first direction D1.

Next, as illustrated in Fig. 47, at a time point t=4T, an electromagnetic wave from the transmitter 100 is emitted toward the second direction D2.

Next, as illustrated in Fig. 48, at a time point t=6T, an electromagnetic wave from the first direction D1 and an electromagnetic wave from the second direction D2 reach the receiver 200. At the time point t=6T, the first angular range AR1 has already passed the first direction D1, and does not reach the second direction D2 yet. Consequently, the electromagnetic waves are not detected by the receiver 200.

(Example 4)

Fig. 49 is a timing chart for explaining an operation of the sensor device 10 according to Example 4. The sensor device 10 according to this example is the same as the sensor device 10 according to the embodiment except for the following contents.

In the example illustrated in Fig. 49, the light emitting device 10 is operated as follows. The transmitter 100 emits electromagnetic waves at a first timing (time point t=t1) and a second timing (time point t=t2) after the first timing. The transmitter 100 emits the electromagnetic waves such that a period (period P2) during which the receiver 200 is capable of receiving the electromagnetic wave emitted at the second timing is later than a period (period P1) during which the receiver 200 is capable of receiving the electromagnetic wave emitted at the first timing. Particularly, in the example illustrated in Fig. 49, the transmitter 100 emits the electromagnetic wave later than the period (period P1) during which the receiver 200 is capable of receiving the electromagnetic wave emitted at the first timing.

According to the configuration, it is possible to uniquely determine which timing of an electromagnetic wave emitted from the transmitter 100 is an electromagnetic wave received by the receiver 200. Specifically, if the period P2 overlapped the period P1, it could not be uniquely determined whether an electromagnetic wave received by the receiver 200 in a period during which the period P1 overlaps the period P2 is an electromagnetic wave emitted at the first timing or an electromagnetic wave emitted at the second timing. In contrast, in the configuration, the electromagnetic wave emitted at the first timing is not received by the receiver 200 in the period P2. Therefore, it is possible to uniquely determine which timing of an electromagnetic wave emitted from the transmitter 100 is an electromagnetic wave received by the receiver 200.

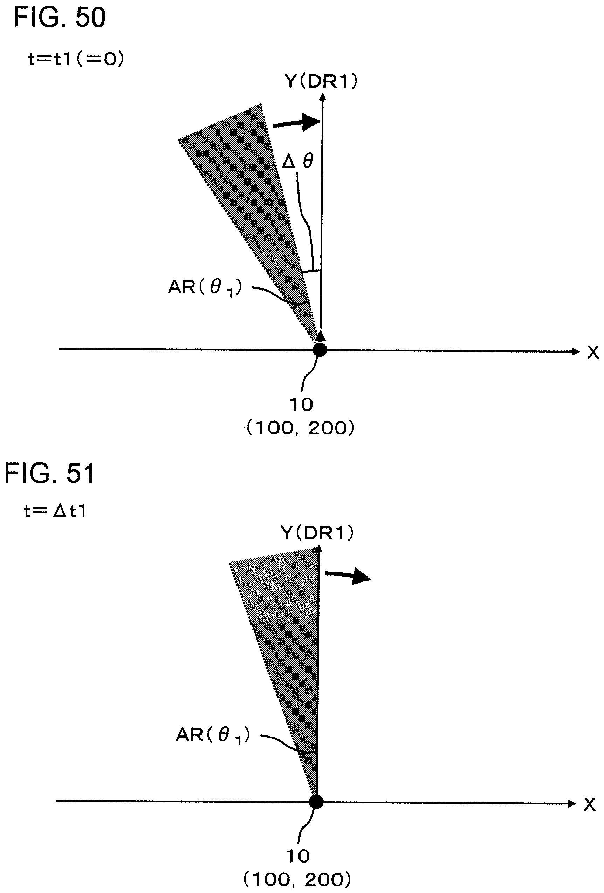

Figs. 50 to 55 are diagrams for explaining an example of the operation illustrated in Fig. 49. In Figs. 50 to 55, the first angular range AR rotates clockwise.

In Fig. 50 (time point t=t1=0: first timing), the transmitter 100 emits an electromagnetic wave in a direction DR1 (the Y axis direction in Fig. 50). Therefore, the sensor device 10 can detect a target object on the direction DR1.

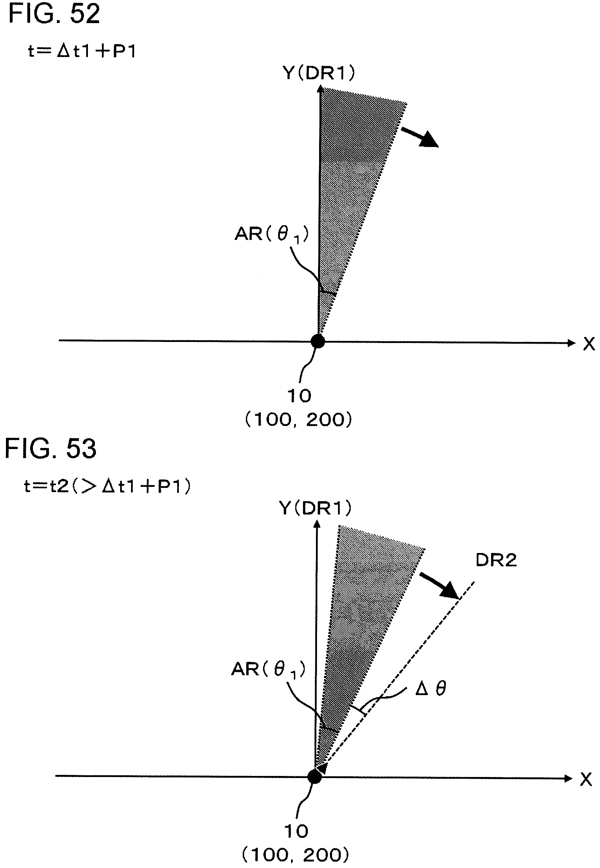

In Fig. 51 (time point t=Δt1), the first angular range AR reaches the direction DR1. From the timing illustrated in Fig. 51 to a timing illustrated in Fig. 52 which will be described later, the receiver 200 is capable of receiving an electromagnetic wave from the direction DR1 (that is, an electromagnetic wave emitted from the transmitter 100 at the first timing (Fig. 50) and then reflected by the target object).

In Fig. 52 (time point t=Δt1+P1), the first angular range AR passes the direction DR1. From the timing illustrated in Fig. 52, the receiver 200 is incapable of receiving the electromagnetic wave from the direction DR1 (that is, an electromagnetic wave emitted from the transmitter 100 at the first timing (Fig. 50) and then reflected by the target object).

In Fig. 53 (time point t=t2 (>Δt1+P1): second timing), the transmitter 100 emits an electromagnetic wave in a direction DR2. Therefore, the sensor device 10 can detect a target object on the direction DR2.

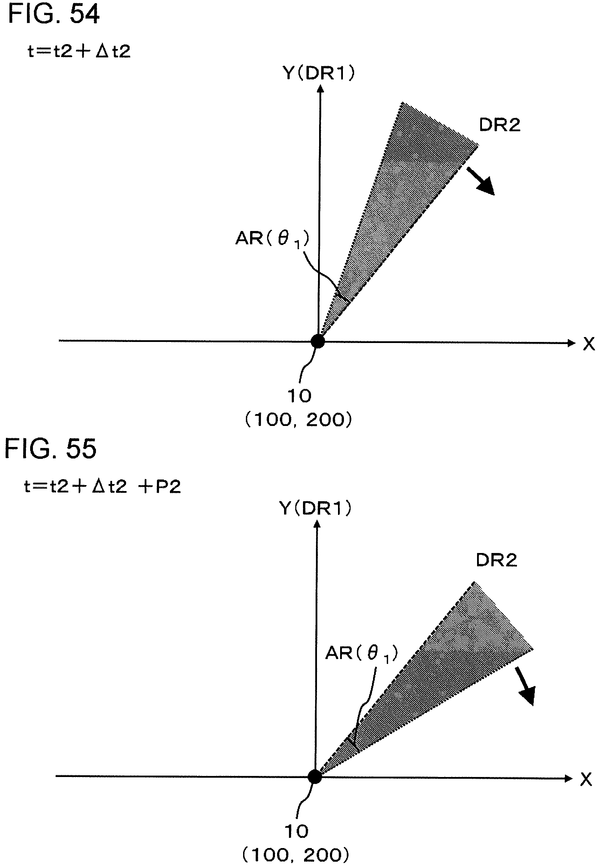

In Fig. 54 (time point t=t2+Δt2), the first angular range AR reaches the direction DR2. From the timing illustrated in Fig. 54 to a timing illustrated in Fig. 55 which will be described later, the receiver 200 is capable of receiving an electromagnetic wave from the direction DR2 (that is, an electromagnetic wave emitted from the transmitter 100 at the second timing (Fig. 53) and then reflected by the target object).

In Fig. 55 (time point t=t2+Δt2+P2), the first angular range AR passes the direction DR2. From the timing illustrated in Fig. 55, the receiver 200 is incapable of receiving the electromagnetic wave from the direction DR2 (that is, an electromagnetic wave emitted from the transmitter 100 at the second timing (Fig. 53) and then reflected by the target object).

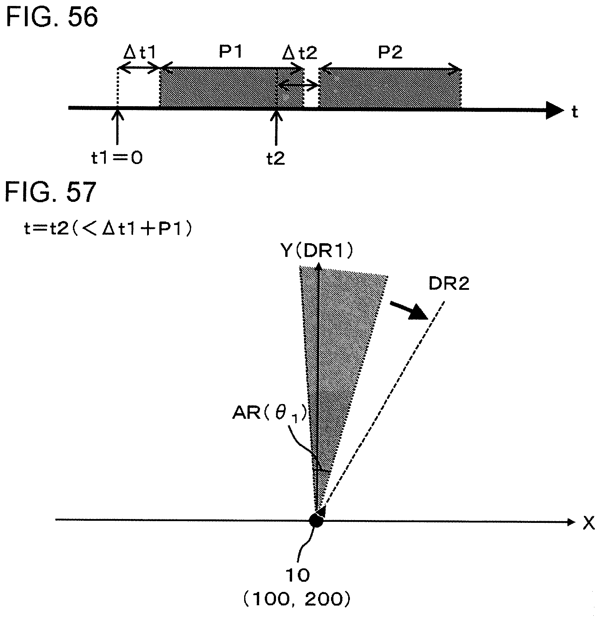

Fig. 56 is a diagram illustrating a modification example of Fig. 49. An operation illustrated in Fig. 56 is the same as the operation illustrated in Fig. 49 except that the second timing (time point t=t2) is in a period during which the receiver 200 is capable of receiving an electromagnetic wave emitted at the first timing (time point t=t1).

According to the example illustrated in Fig. 56, even though the transmitter 100 emits an electromagnetic wave in the period P1, in the same manner as in the example illustrated in Fig. 49, it is possible to uniquely determine at which timing of an electromagnetic wave emitted from the transmitter 100 is an electromagnetic wave received by the receiver 200.

According to the example illustrated in Fig. 56, an interval between the first timing (time point t=t1) and the second timing (time point t=t2) can be shorter than in the example illustrated in Fig. 49. In other words, an electromagnetic wave can be emitted at a short time interval.

Figs. 57 to 60 are diagrams for explaining an example of the operation illustrated in Fig. 56. Operations illustrated in Figs. 57 to 60 are the same as the operations illustrated in Figs. 50 to 55 except for the following contents.

First, the same operations as the operations illustrated in Figs. 50 and 51 are performed.

Next, in Fig. 57 (time point t=t2 (<Δt1+P1): second timing), the transmitter 100 emits an electromagnetic wave in the direction DR2. Therefore, the sensor device 10 can detect a target object on the direction DR2.

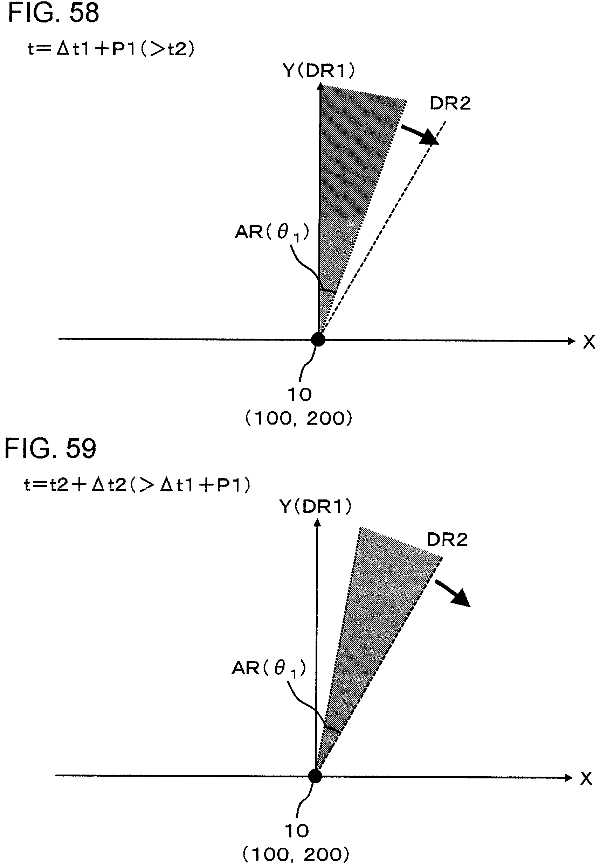

In Fig. 58 (time point t=Δt1+P1 (>t2)), the first angular range AR passes the direction DR1. From the timing illustrated in Fig. 58, the receiver 200 is incapable of receiving the electromagnetic wave from the direction DR1 (that is, an electromagnetic wave emitted from the transmitter 100 at the first timing (Fig. 50) and then reflected by the target object). On the other hand, at the timing illustrated in Fig. 58, the first angular range AR does not reach the direction DR2 yet. Therefore, at the timing illustrated in Fig. 58, the receiver 200 cannot receive an electromagnetic wave from the direction DR2 (that is, an electromagnetic wave emitted from the transmitter 100 at the second timing (Fig. 57) and then reflected by the target object).

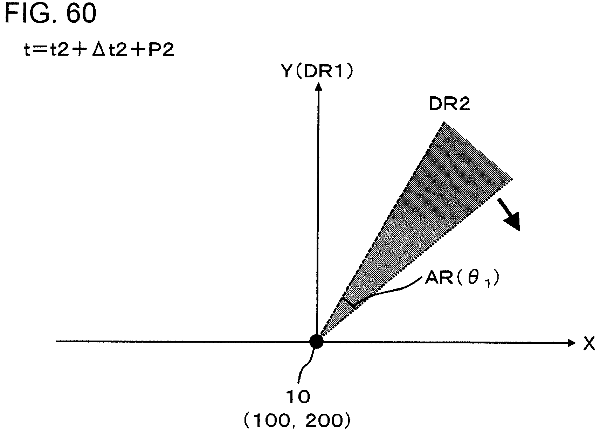

In Fig. 59 (time point t=t2+Δt2 (>Δt+P1)), the first angular range AR reaches the direction DR2. From the timing illustrated in Fig. 59 to a timing illustrated in Fig. 60 which will be described later, the receiver 200 is capable of receiving an electromagnetic wave from the direction DR2 (that is, an electromagnetic wave emitted from the transmitter 100 at the second timing (Fig. 57) and then reflected by the target object).

In Fig. 60 (time point t=t2+Δt2+P2), the first angular range AR passes the direction DR2. From the timing illustrated in Fig. 60, the receiver 200 is incapable of receiving the electromagnetic wave from the direction DR2 (that is, an electromagnetic wave emitted from the transmitter 100 at the second timing (Fig. 57) and then reflected by the target object).

As mentioned above, the embodiment and the Examples have been described with reference to the drawings, but these are only examples of the present invention, and various configurations other than the embodiment and the Examples may be employed.

This application is claims priority from Japanese Patent Application No. 2016-207988, filed October 24, 2016, the disclosure of which is incorporated herein by reference in its entirety.

**Claims**

1. A sensor device comprising:

   a transmitter; and
   a receiver,
   wherein the receiver is capable of detecting an electromagnetic wave from a first angular range outside the sensor device, and
   wherein an electromagnetic wave from the transmitter is emitted toward the outside of the first angular range.

2. The sensor device according to claim 1, further comprising:

   a movable reflector comprising a first surface,
   wherein the electromagnetic wave from the transmitter is emitted toward the outside of the sensor device by the first surface, and
   wherein the electromagnetic wave from the first angular range is reflected toward the receiver by the first surface.

3. The sensor device according to claim 1, further comprising:

   a driver,
   wherein the driver rotates the transmitter and the receiver with a direction allowing emission of the electromagnetic wave from the transmitter, and the first angular range oriented toward the outside of the sensor device.

4. A sensor device comprising:

   a transmitter that emits an electromagnetic wave; and
   a receiver that receives the electromagnetic wave,
   wherein the receiver is disposed at a position incapable of receiving a first reflected wave which is a result of the electromagnetic wave emitted from the transmitter at a first timing and is reflected by a first reflection object, and capable of receiving a second reflected wave reflected by a second reflection object present farther than the first reflection object.

5. A sensor device comprising:

   a transmitter; and
   a receiver,
   wherein the transmitter emits an electromagnetic wave in a first direction at a first timing, and
   wherein a receivable range of the receiver is set such that reflected light which is a result of light emitted at the first timing and is reflected by a predetermined reflection object is receivable at a second timing temporally later than the first timing.

6. A sensing method used by a sensor device including a transmitter and a receiver, the sensing method comprising:

   an emission step of emitting an electromagnetic wave from the transmitter; and
   a reception step of detecting, by the receiver, an electromagnetic wave from a first angular range outside the sensor device,
   wherein the electromagnetic wave emitted from the transmitter is emitted toward the outside of the first angular range.

7. A program causing a computer to execute the sensing method according to claim 6.

8. A storage medium storing the program according to claim 7.

9. A sensor device comprising:

   a transmitter; and
   a receiver,
   wherein the transmitter emits electromagnetic waves at a first timing and a second timing later than the first timing, and

wherein the transmitter emits the electromagnetic waves such that a period during which the receiver is capable of receiving an electromagnetic wave emitted at the second timing is later than a period during which the receiver is capable of receiving an electromagnetic wave emitted at the first timing.

**10.** The sensor device according to claim 9,

wherein the second timing is in a period during which the receiver is capable of receiving the electromagnetic wave emitted at the first timing.

FIG. 1

FIG. 2

t=0

## FIG. 3

t=T

## FIG. 4

t=2T

## FIG. 5

t=0

## FIG. 6

t=2T

# FIG. 7

t=4T

# FIG. 8

t=0

## FIG. 9

t=3T

## FIG. 10

t=6T

## FIG. 11

## FIG. 12

t=0

## FIG. 13

t=3T

## FIG. 14

t=4T

FIG. 15

t=5T

FIG. 16

t=6T

FIG. 17

## FIG. 18

## FIG. 19

t=0

FIG. 20

t=4T

FIG. 21

t=6T

FIG. 22

t=7T

FIG. 23

t=8T

FIG. 24

<u>10</u>

$AR(\theta_1)$

312

310

100

212

200

FIG. 25

<u>200</u>

212

100%
50%

100%
50%

100%
50%

B

A

C

## FIG. 26

t=0

D1

10

AR(θ₁)

312

310

100

212

200

## FIG. 27

t=2T

D1

10

AR(θ₁)

312

310

100

212

200

FIG. 28

t=4T

D1

AR($\theta_1$)

312

310

10

100

212

200

FIG. 29

t=6T

D1

AR($\theta_1$)

312

310

10

100

212

200

## FIG. 30

t=0

## FIG. 31

t=4T

FIG. 32

t=6T

10

D1    D2

θ₂

AR(θ₁)

312

310

212

200

100

FIG. 33

10

AR(θ₁)

312

300

314

100

200

212

FIG. 34

t=0

<u>10</u>

D1

AR($\theta_1$)

312

300

314

100

200

212

FIG. 35

t=2T

<u>10</u>

D1

AR($\theta_1$)

312

300

314

100

200

212

FIG. 36

t=4T

10

FIG. 37

t=6T

10

FIG. 38

t=0

10

D1

AR($\theta_1$)

312

300

314

100

200

212

FIG. 39

t=4T

10

D2

AR($\theta_1$)

312

300

314

100

200

212

# FIG. 40

t=6T

10

## FIG. 41

10

AR($\theta_1$)

200  100

320

## FIG. 42

t=0                                       <u>10</u>

$AR(\theta_1)$

D1

200    100

320

## FIG. 43

t=2T

10

D1

AR($\theta_1$)

200   100

320

# FIG. 44

t=4T

10

D1

AR($\theta_1$)

200  100

320

## FIG. 45

t=6T

10

D1

AR($\theta_1$)

200

100

320

## FIG. 46

t=0

<u>10</u>

AR($\theta_1$)

D1

200    100

320

## FIG. 47

t=4T  <u>10</u>

AR($\theta_1$)

D2

200  100

320

## FIG. 48

t=6T

<u>10</u>

D1   D2

$\theta_2$

AR($\theta_1$)

200   100

320

## FIG. 49

$\Delta t1$   P1   $\Delta t$ $\Delta t2$   P2

t

t1=0   t2

## FIG. 50

t=t1(=0)

## FIG. 51

t=△t1

## FIG. 52

$t = \Delta t1 + P1$

## FIG. 53

$t = t2 (> \Delta t1 + P1)$

FIG. 54

t=t2+Δt2

FIG. 55

t=t2+Δt2 +P2

## FIG. 56

## FIG. 57

$t=t2(<\Delta t1+P1)$

FIG. 58

$t = \Delta t1 + P1 (> t2)$

FIG. 59

$t = t2 + \Delta t2 (> \Delta t1 + P1)$

## FIG. 60

$t = t2 + \Delta t2 + P2$

## FIG. 61

10

## INTERNATIONAL SEARCH REPORT

| International application No. |
| --- |
| PCT/JP2017/038389 |

**A. CLASSIFICATION OF SUBJECT MATTER**
Int.Cl. G01S7/486(2006.01)i, G01S7/484(2006.01)i, G01S17/08(2006.01)i

According to International Patent Classification (IPC) or to both national classification and IPC

**B. FIELDS SEARCHED**

Minimum documentation searched (classification system followed by classification symbols)
Int.Cl. G01S7/486, G01S7/484, G01S17/08

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2017 |
| Registered utility model specifications of Japan | 1996–2017 |
| Published registered utility model applications of Japan | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 59-195176 A (TSUMURA, Toshihiro) 06 November 1984, page 2, lower right column, page 3, lower left column, fig. 3 (Family: none) | 1, 3-4, 6-8<br>5, 9-10<br>2 |
| Y | JP 50-99361 A (KOMATSU LTD.) 07 August 1975, page 1, right column (Family: none) | 5, 9-10 |
| A | JP 59-182382 A (NIPPON SOKEN, INC.) 17 October 1984, entire text, all drawings (Family: none) | 1-10 |
| A | JP 2001-183462 A (HONDA MOTOR CO., LTD.) 06 July 2001, entire text, all drawings (Family: none) | 1-10 |

☐ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 November 2017 (30.11.2017) | 12 December 2017 (12.12.2017) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**REFERENCES CITED IN THE DESCRIPTION**

**Patent documents cited in the description**

- JP 2011095208 A

- JP 2016207988 A